(19) Europäisches Patentamt
European Patent Office
Office européen des brevets

(11) Veröffentlichungsnummer: **0 285 969 B1**

(12) # EUROPÄISCHE PATENTSCHRIFT

(45) Veröffentlichungstag der Patentschrift: **27.05.92**

(51) Int. Cl.[5]: **C08L 71/12**, C08L 25/04, C08L 51/06

(21) Anmeldenummer: **88105028.0**

(22) Anmeldetag: **29.03.88**

Die Akte enthält technische Angaben, die nach dem Eingang der Anmeldung eingereicht wurden und die nicht in dieser Patentschrift enthalten sind.

(54) **Thermoplastische Formmassen auf Basis von Polyphenylenether.**

(30) Priorität: **07.04.87 DE 3711758**

(43) Veröffentlichungstag der Anmeldung:
**12.10.88 Patentblatt 88/41**

(45) Bekanntmachung des Hinweises auf die Patenterteilung:
**27.05.92 Patentblatt 92/22**

(84) Benannte Vertragsstaaten:
**BE DE FR GB NL**

(56) Entgegenhaltungen:
**EP-A- 0 071 785**
**EP-A- 0 176 774**
**WO-A-85/02858**
**EP-A- 0 150 388**
**EP-A- 0 176 775**
**DE-A- 3 526 549**

(73) Patentinhaber: **BASF Aktiengesellschaft**
**Carl-Bosch-Strasse 38**
**W-6700 Ludwigshafen(DE)**

(72) Erfinder: **Taubitz, Christof, Dr.**
**In der Dreispitz 15**
**W-6706 Wachenheim(DE)**
Erfinder: **Seiler, Erhard, Dr.**
**Erpolzheimer Strasse 1**
**W-6700 Ludwigshafen(DE)**
Erfinder: **Boehlke, Klaus, Dr.**
**Gerhart-Hauptmann-Strasse 53**
**W-6717 Hessheim(DE)**
Erfinder: **Ostermayer, Bertram, Dr.**
**Pfaffenpfad 14**
**W-6701 Roedersheim-Gronau(DE)**
Erfinder: **Gausepohl, Hermann, Dr.**
**Neuweg 10**
**W-6704 Mutterstadt(DE)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft thermoplastische Formmassen auf Basis von Polyphenylenether, erhältlich durch Mischen bei einer Temperatur von 200 bis 320 ° C während 0,5 bis 30 Minuten von im wesentlichen

A) 2 bis 95.99 Gew.-Teilen, bezogen auf die Summe der Komponenten A, B, und D eines modifizierten Polyphenylenethers, hergestellt durch Umsetzung in der Schmelze von

$a_1$) 70 bis 99,95 Gew.%, bezogen auf A, eines Polymeranteils, der mindestens 30 Gew.%, bezogen auf $a_1$, Polyphenylenether und höchstens 70 Gew.%, bezogen auf $a_1$, eines vinylaromatischen Polymeren enthält,

$a_2$) 0,05 bis 10 Gew.%, bezogen auf A, mindestens einer der Verbindungen

$a_{21}$) eines amidgruppenhaltigen Monomeren mit einer polymerisierbaren Doppelbindung,

$a_{22}$) eines lactamgruppenhaltigen Monomeren mit einer polymerisierbaren Doppelbindung

$a_{23}$) einer $\alpha,\beta$-ungesättigten Dicarbonylverbindung und

$a_3$) 0 bis 20 Gew.%, bezogen auf A, eines weiteren Comonomeren, das unter den Herstellbedingungen mit $a_1$ und/oder $a_2$ reagieren kann,

B) 2 bis 95,99 Gew.-Teilen, bezogen auf die Summe der Komponenten A, B, C und D eines thermoplastischen Copolymerisates aus 30 bis 90,9 Gew.%, bezogen auf B, eines vinylaromatischen Kohlenwasserstoffes mit 8 bis 12 C-Atomen ($b_{11}$), 9 bis 40 Gew.%, bezogen auf B, eines nitrilgruppenhaltigen, ethylenisch ungesättigten Monomeren mit 3 bis 6 C-Atomen ($b_{12}$), 0,1 bis 30 Gew.%, bezogen auf B, eines Maleinsäurederivates ($b_{13}$) oder eines eine Epoxygruppe ($b_{14}$), Oxazolingruppe ($b_{15}$) oder Hydroxygruppe ($b_{16}$) tragenden copolymerisierbaren ethylenisch ungesättigten Monomeren oder eines Gemisches von mindestens zwei der Verbindungen $b_{13}$ bis $b_{16}$ und 0 bis 30 Gew.%, bezogen auf B, mindestens eines von $b_{11}$ bis $b_{16}$ verschiedenen, copolymerisierbaren, ethylenisch ungesättigten Monomeren $b_{17}$,

C) 2 bis 95,99 Gew.-Teilen, bezogen auf die Summe aus A, B, C und D, eines Pfropfmischpolymerisates aus 30 bis 90 Gew.%, bezogen auf C, eines Butadien- und/oder Acrylatkautschukes mit einer Glastemperatur von unter 0 ° C als Pfropfgrundlage und 10 bis 70 Gew.%, bezogen auf C, eines in Gegenwart der Pfropfgrundlage hergestellten Copolymerisates B als Pfropfhülle,

und

D) 0,01 bis 10 Gew.-Teilen, bezogen auf die Summe von A, B, C und D einer Verbindung, die mindestens zwei Substituenten aus der Gruppe der Hydroxy-, Thiol-, Epoxy- und Aminoreste enthält,

wobei die Summe der Komponenten aus A, B, C und D 100 Gew.-Teile ergibt.

Thermoplastische Formmassen, die Styrolpolymerisate und Polyphenylenether (PPE) enthalten, sind z.B. aus den US-Patentschriften 3 383 435, 4 128 602 sowie 4 128 603 bekannt. Solche Formmassen eignen sich zur Herstellung von Formteilen, die eine bessere Wärmeformbeständigkeit haben als solche Formteile, die kein Polyphenylenether enthalten.

Es ist in der US-Patentschrift 4 360 618 vorgeschlagen worden, Styrolpolymerisate, die 2 bis 8 Gew.% Acrylnitril einpolymerisiert enthalten, zur Herstellung von Formteilen zu verwenden. Es zeigte sich jedoch, daß schon bei höheren Acrylnitrilgehalten, die über 8,5 Gew.% liegen, eine Unverträglichkeit mit dem Polyphenylenether (PPE) auftritt, so daß Formkörper mit schlechten mechanischen Werten aus derartigen Mischungen erhalten werden. Formmassen, die PPE und Styrolacrylnitrilcopolymerisate mit höheren Gehalten an Acrylnitril (SAN), die gegebenenfalls schlagzäh modifiziert sind, sind in US-A-4 578 423 beschrieben.

In der US-Patentschrift 4 387 189 werden Copolymerisate aus Styrol und Säure-, Säureanhydrid- oder Säurechlorid-Comonomeren, die gegebenenfalls Acrylnitril enthalten können, mit PPE umgesetzt. Nachteilig ist die nichtausreichende mechanische Stabilität der Formkörper, besonders wenn die Copolymeren Acrylnitril enthalten, was vermutlich in der geringen Reaktivität der Comonomeren zum PPE bei Anwesenheit von Acrylnitril begründet ist. Dies gilt insbesondere dann, wenn das Copolymere durch gepfropfte Butadien- oder Acrylatkautschuke schlagzäh modifiziert ist.

In der EP-B 156 990, EP-A 170 946 und EP-A200 185 werden spezielle Pfropfcopolymerisate, die aus PPE und Styrolacrylnitril-Copolymerisaten mit besonderen Monomerbausteinen unter Zuhilfenahme spezieller Kopplungsmittel erhalten wurden, mit verbesserten mechanischen Eigenschaften beschrieben. Ungünstig sind dabei jedoch die noch nicht befriedigenden mechanischen Eigenschaften der Formmassen und der daraus hergestellten Formteile bzw. die technische aufwendige Produktion der Formmassen über die Herstellung der speziellen Copolymerisate und die anschließende Kopplungsreaktion in organischen Lösungsmitteln.

Die Flammfestausrüstung von thermoplastischen Kunststoffen ist aus Vogel, "Flammfestmachen von Kunststoffen", Hüthig-Verlag, Heidelberg (1966), Seiten 94 bis 102,

Troitzsch, "Brandverhalten von Kunststoffen", Hanser-Verlag, München (1982), Seiten 1 bis 65, Hirschler, "Developments in Polymer Stabilization", Band 5, Editor G. Scott, Applied Science Publishers, London (1982), Seiten 107 bis 151 bekannt. Bei Anwendung verhältnismäßig großer Mengen an Halogen enthaltenden Flammschutzmitteln und unter gleichzeitiger Anwendung von Synergisten, tropfen Thermoplaste nach dem Beflammen mit einer heißen Flamme nichtbrennend ab und verlöschen von selbst. Dieser Effekt des Selbstverlöschens tritt ohne die Anwendung eines Synergisten erst nach Zugabe einer weitaus größeren Menge an Halogen enthaltenden Flammschutzmitteln ein. So ausgerüstete Formmassen zeigen Nachteile, die vom Verarbeiter meist nicht toleriert werden. Charakteristisch sind z.B. die Verfärbung der Formmassen sowie die Korrosion von Verarbeitungsmaschinen.

Ohne Verwendung von Synergisten muß die Flammschutzmittelmenge erhöht werden, was zu einer starken Beeinträchtigung der damit ausgerüsteten Thermoplaste und aufgrund einer deutlichen Absenkung der Wärmeformbeständigkeit zu brennendem Abtropfen führt. Diese Probleme können mithin nur durch eine Senkung der Menge an halogenhaltigen Flammschutzmitteln gelöst werden. Häufig erreichen die Thermoplaste dann jedoch nicht mehr die Einstufung UL 94 V0 oder UL 94 V1.

Außer der vorstehend angeführten Möglichkeit, thermoplastische Kunststoffe mit Halogen enthaltenden Flammschutzmitteln auszurüsten, gibt es auch die Möglichkeit eines halogenfreien Flammschutzes. So sind aus der DE-A 3 432 749, der DE-A 3 432 750 und der DE-A 3 526 549 selbstverlöschende, halogenfreie Formmassen auf Basis von PPE und Styrol-Acrylnitrilpolymerisaten bekannt. Ungünstig sind dabei jedoch die noch nicht befriedigenden mechanischen Eigenschaften der Formmassen und der daraus hergestellten Formteile bzw. die technisch aufwendige Produktion der Formmassen über die Herstellung der speziellen Copolymerisate und die anschließende Kopplungsreaktion in organischen Lösungsmitteln.

Der vorliegenden Erfindung lag daher die Aufgabe zugrunde, auf Basis von Polyphenylenether thermoplastische Formmassen bereitzustellen, die die geschilderten Nachteile vermeiden, einfach herzustellen sind und zu Formkörpern mit guten mechanischen Eigenschaften verarbeitet werden können.

Diese Aufgabe wurde erfindungsgemäß gelöst durch die eingangs definierten thermoplastischen Formmassen.

Außerdem wurden spezielle Ausgestaltungen der Formmassen gemäß der Unteransprüche und ein Verfahren zu ihrer Herstellung gefunden.

Im folgenden werden die Formmassen im Einzelnen beschrieben.

Es versteht sich dabei von selbst, daß für selbstverlöschende halogenfreie thermoplastische Formmassen nur solche Komponenten in Frage kommen, die ihrerseits bis auf Spuren frei von Halogen sind.

Als Komponente A enthalten die erfindungsgemäßen Formmassen 2 bis 95,99, vorzugsweise 10 bis 84,9, insbesondere 24,9 bis 70 Gew.-Teile, bezogen auf 100 Gew.-Teile der Summe der Komponenten A, B, C und D, mindestens eines modifizierten Polyphenylenethers eingemischt, der unter Verwendung der Komponenten $a_1$, $a_2$ und gegebenenfalls $a_3$ hergestellt wird. Unter "modifiziert" soll dabei eine durch die Umsetzung der Komponenten $a_1$ mit $a_2$ bzw. $a_3$ hervorgerufene Veränderung von $a_1$ verstanden werden.

Bei der Komponente $a_1$ handelt es sich um einen Polymeranteil, der mindestens 30, bevorzugt mehr als 50, insbesondere mehr als 60 Gew.%, bezogen auf $a_1$, Polyphenylenether und höchstens 70, bevorzugt weniger als 50, insbesondere weniger als 40 Gew.%, bezogen auf $a_1$, eines vinylaromatischen Polymeren enthält. Für halogenfreie, selbstverlöschende Formmassen ist es insbesondere von Vorteil, mehr als 90 Gew.% PPE und weniger als 10 Gew.%, jeweils bezogen auf $a_1$, des vinylaromatischen Polymeren zu verwenden.

Die in Frage kommenden Polyphenylenether sind an sich bekannt, sie werden nach üblichen Verfahren aus in ortho-Position durch Alkylgruppen, Alkoxygruppen, bei halogenhaltigen Formmassen auch durch Chlor oder Brom disubstituierten Phenolen, durch oxidative Kopplung hergestellt (vgl. US-Patent 3 661 848, 3 378 505, 3 306 874, 3 306 875 und 3 639 656). Die Alkyl- oder Alkoxygruppen, die bevorzugt 1 bis 4 C-Atome, aber kein $\alpha$-ständiges tertiäres Wasserstoffatom enthalten, können bei halogenhaltigen Formmassen auch ihrerseits durch Chlor oder Brom substituiert sein. Geeignete Polyphenylenether sind beispielsweise Poly-2,6-diethyl-1,4-phenylenether, Poly-2-methyl-6-ethyl-1,4-phenylenether, Poly-2-methyl-6-propyl-1,4-phenylenether, Poly-2,6-dipropyl-1,4-phenylenether, Poly-2-ethyl-6-propyl-1,4-phenylenether, bei halogenhaltigen Formmassen auch Poly-2,6-dichlor-1,4-phenylenether und Poly-2,6-dibrom-1,4-phenylen-ether, oder Copolymere, wie solche, die 2,3,6-Trimethylphenol enthalten, außerdem Polymermischungen. Bevorzugt ist Poly-2,6-dimethyl-1,4-phenylen-ether. Die in einem solchen Verfahren hergestellten Polyphenylenether weisen im allgemeinen eine relative Viskosität von 0,3 bis 0,8 dl/g, gemessen in 1-gew.%iger Lösung in Chloroform bei 30 °C auf.

Das vinylaromatische Polymer ist vorzugsweise mit dem eingesetzten Polyphenylenether verträglich, d.h. ganz oder weitgehend in diesen Polymeren löslich (vgl. A. Noshay, Block Copolymers, S. 8 bis 10, Academic Press, 1977 und O. Olabisi, Polymer-Polymer Miscibility, 1979, S. 117 bis 189).

Die vinylaromatischen Polymeren weisen im allgemeinen einen Schmelzindex (MFI, 200 °C/5 kg, gemessen nach DIN 53 735) von 1 bis 30, insbesondere von 15 bis 25 g/10 min auf.

Beispiele für bevorzugte, mit Polyphenylenethern verträgliche vinylaromatische Polymere sind der bereits erwähnten Monographie von Olabisi, S. 224 bis 230 und 245 zu entnehmen. Nur stellvertretend seien hier vinylaromatische Polymere aus Styrol, α-Methylstyrol oder p-Methylstyrol genannt; in untergeordneten Anteilen (vorzugsweise nicht mehr als 20, insbesondere nicht mehr als 8 Gew.%, bezogen auf die Polymeren), können auch Comonomere wie (Meth)acrylnitril oder (Meth)acrylsäureester im Aufbau beteiligt sein. Ein besonders bevorzugtes vinylaromatisches Polymeres ist Polystyrol. Es versteht sich, daß auch Mischungen dieser Polymeren eingesetzt werden können.

Verfahren zur Herstellung solcher vinylaromatischer Polymerer sind an sich bekannt und in der Literatur beschrieben, so daß sich hier nähere Angaben erübrigen. Nur beispielsweise seien hier als geeignete Polymerisationsverfahren die Masse-, Suspensions-, Emulsions- oder Lösungspolymerisation erwähnt.

Der Anteil der Komponente $a_1$ an der Komponente A liegt im Bereich von 70 bis 99,95, vorzugsweise 82 bis 99,9 und insbesondere 95 bis 99,8 Gew.%, bezogen auf A.

Als wesentliche Komponente $a_2$ enthält der modifizierte Polyphenylenether A mindestens eine der Verbindungen $a_{21}$ bis $a_{23}$. Prinzipiell können auch Mischungen verschiedener Verbindungen $a_{21}$ bis $a_{23}$ eingesetzt werden, doch ist im allgemeinen die Verwendung nur einer dieser Verbindungsarten vorteilhaft. Bevorzugt wird die Komponente $a_{23}$ eingesetzt.

Der Anteil der Komponente $a_2$ beträgt 0,05 bis 10, vorzugsweise 0,1 bis 8, insbesondere 0,2 bis 5 Gew.%, bezogen auf die Komponente A.

Als Komponente $a_2$ sind mindestens eine Amidgruppe enthaltende Monomere mit mindestens einer polymerisierbaren Doppelbindung ($a_{21}$) geeignet, vorzugsweise solche der allgemeinen Formeln I oder II

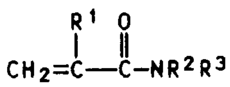

I

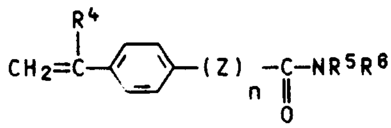

II ,

wobei $R^1$, $R^2$, $R^3$, $R^4$, $R^5$ und $R^6$ Wasserstoff, Alkyl- oder Cycloalkylgruppen mit bis zu 12 C-Atomen oder Arylgruppen und Z Alkylengruppen mit 1 bis 12 C-Atomen und $R^1$ und $R^4$ zusätzlich Alkoxygruppen mit bis zu 12 C-Atomen darstellen und n den Wert 0 oder 1, vorzugsweise 0 hat.

Bevorzugte Substituenten $R^1$, $R^2$, $R^3$, $R^4$, $R^5$ und $R^6$ sind Wasserstoff, Alkylgruppen mit 1 bis 10 C-Atomen, Cycloalkylgruppen mit bis zu 8 C-Atomen oder Arylgruppen, z.B. Phenyl. $R^1$ und $R^4$ sind insbesondere H oder Methyl.

Beispielhaft seien hier Acrylamid, N-Methyl-, N-Ethyl-, N-Propyl-, N-Butyl-, N-Pentyl-, N-Hexyl-, N-Heptyl-, N-Octyl-, N-Nonyl-, N-(2-ethylhexyl)-acrylamid, N-Cyclohexylacrylamid, N-Phenylacrylamid, die entsprechenden N,N-Derivate wie N,N-Dimethylacrylamid und die entsprechenden Methacrylamide sowie deren Mischungen genannt. Bevorzugt werden Acrylamid, Methacrylamid, N-Phenylacrylamid und N-Phenylmethacrylamid verwendet.

Als Komponente $a_2$ kann auch ein mindestens eine Lactam-Gruppe enthaltendes Monomer mit einer polymerisierbaren Doppelbindung ($a_{22}$) eingesetzt werden. Vorzugsweise werden Lactame der allgemeinen Struktur III

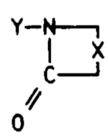

III

eingesetzt, wobei X eine lineare verzweigte Alkylengruppe mit 2 bis 15 C-Atomen darstellt und Y die allgemeine Formel

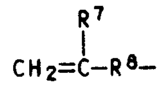

hat, wobei $R^7$ ein Wasserstoffatom, eine Alkyl- oder Alkoxygruppe mit 1 bis 4 C-Atomen und $R^8$ einen zweibindigen Substituenten

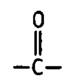

,

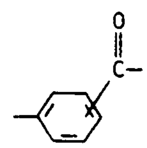

oder

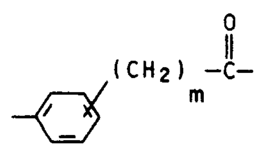

,

wobei m eine ganze Zahl von 1 bis 4 ist, darstellen.

Bevorzugte Substituenten Y sind ganz allgemein Vinyl-, Acryloyl-, Methacryloyl- oder Reste mit Styrol-Grundstrukturen, insbesondere der Acryloyl- oder Methacryloylrest.

Bevorzugt sind Lactameinheiten, die zu Polyamiden polymerisierbar oder copolymerisierbar sind, wie dies in Houben-Weyl, Methoden der organ. Chemie, Band XI/2, S. 511 bis 587, (1958) und Band XIV/2, S. 111 bis 131, (1963) beschrieben wird. Beispielsweise seien $\beta$-Propiolactame wie 3,3'-Dimethyl-3-propiolactam, genannt. Ebenfalls bevorzugte Lactam-Einheiten sind Pyrrolidon und $\epsilon$-Caprolactam, außerdem 7-Önantholactam, 8-Capryllactam und 12-Laurinlactam, wie sie bei K. Dachs, Angewandte Chemie, 74, 540 bis 545, (1962) beschrieben werden. Es können auch Mischungen dieser Verbindungen eingesetzt werden.

Als besonders bevorzugtes Beispiel einer Komponente $a_{22}$ sei hier nur N-(Meth)acryloyl-$\epsilon$-caprolactam

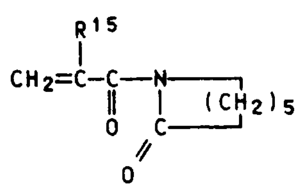

genannt,
wobei $R^{15}$ ein Wasserstoffatom oder eine Methylgruppe sein kann.

Bei der Komponente $a_{23}$ handelt es sich um $\alpha,\beta$-ungesättigte Dicarbonylverbindungen, bevorzugt solche der allgemeinen Formel IV

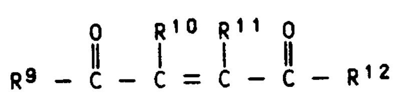

IV,

wobei

$R^9$ und $R^{12}$ Hydroxylgruppen, Aroxy-, Alkoxy-, Aralkoxy- oder Cycloalkoxygruppen mit bis zu 12 C-Atomen, $-NR^{13}R^{14}$ oder gemeinsam -O- oder $-NR^{13}-$,

$R^{10}$ und $R^{11}$ Wasserstoff oder, wenn $R^{10}$ oder $R^{11}$ Wasserstoff ist, eine Alkyl- oder Cycloalkylgruppe mit bis zu 12 C-Atomen, eine Arylgruppe oder gemeinsam eine Alkylengruppe mit 4 C-Atomen,

$R^{13}$ und $R^{14}$ Wasserstoff, Alkyl-, Cycloalkyl-, Aralkyl- oder Arylgruppen mit bis zu 12 C-Atomen, die ihrerseits durch $C_1$-$C_4$-Alkyl- oder -Alkoxygruppen substituiert sein können, darstellen.

Die Substituenten müssen, was sich allerdings von selbst versteht, so beschaffen sein, daß sie die Modifizierungsreaktion nicht verhindern. Es handelt sich daher im allgemeinen um $\alpha,\beta$-ungesättigte Dicarbonsäuren, deren Anhydride, Imide, um Monoester oder Monoamide dieser Dicarbonsäuren, ihre Diester oder Diamide.

Als Beispiele für Dicarbonsäuren seien Maleinsäure, Fumarsäure, Methylmaleinsäure, Butenylbernsteinsäure und Tetrahydrophthalsäure genannt, von denen Maleinsäure und Fumarsäure besonders bevorzugt werden.

Als Anhydride seien beispielhaft erwähnt Maleinsäureanhydrid und Methylmaleinsäureanhydrid.

Bevorzugte Imide leiten sich von der Maleinsäure ab. Die Substituenten $R^{10}$, $R^{11}$ und $R^{13}$ sind dabei Alkylgruppen mit 1 bis 4 C-Atomen, beispielsweise Methyl-, Ethyl- oder n-, i- oder t-Butyl, Cycloakylgruppen mit bis zu 8 C-Atomen oder Phenylgruppen, die im Falle von $R^{13}$ durch $C_1$-$C_4$-Alkylgruppen substituiert sein können. Nur beispielhaft seien als Maleinimide N-Methylmaleinimid, N-Butylmaleinimid, N-Cyclohexylmaleinimid, N-Phenylmaleinimid, N-(p-Methylphenyl)maleinimid, N-(3,5-Dimethylphenyl)maleinimid, N-Benzylmaleinimid, N-(1-Naphthyl)maleinimid oder deren Mischungen genannt. Von diesen wird N-Phenylmaleinimid besonders bevorzugt.

Bevorzugte Halbester und Halbamide leiten sich von der Maleinsäure ab.

Die Halbester leiten sich bevorzugt von primären und sekundären Monoalkoholen, wie Methanol, Ethanol, n- und i-Propanol, n- und i-Butanol, Pentanole, Hexanole, Heptanole, Octanole, z.B. 2-Ethylhexylalkohol und von höheren Alkoholen wie Dodecanolen und cycloaliphatischen Alkoholen, z.B. Cyclohexanol ab. Weiter eignen sich auch Alkohole mit aromatischen Struktureinheiten wie z.B. Benzylalkohol. Bevorzugt werden jedoch Alkanole mit 1 bis 6 C-Atomen. Als Amine zur Herstellung der erfindungsgemäß eingesetzten Halbamide seien ganz allgemein sekundäre Amine und N-Alkylaniline genannt. Beispiele hierfür sind N-Methyl- oder N-Ethylalkylamine oder N-Methylanilin. Ganz allgemein werden Halbester den Halbamiden vorgezogen.

Formmassen, die als Komponente $a_{23}$ einen Halbester oder ein Halbamid der Maleinsäure enthalten, weisen häufig besonders gute Fließeigenschaften, d.h. besonders hohe Schmelzindex-Werte (MFI) auf.

Als $a_3$ kommen weitere, bevorzugt nichtvinylaromatische Comonomere in Frage, die unter den Herstellungsbedingungen mit der Komponente $a_1$ und/oder $a_2$ reagieren bzw. auf diese aufpfropfen können. Beispielsweise seien hier Acrylsäure, Methacrylsäure, Acrylate, Methacrylate und daneben auch vinylaromatische Monomere wie Styrol, $\alpha$-Methylstyrol und Vinyltoluol genannt, um nur einige aufzuführen. Der Anteil der Komponente $a_3$ beträgt 0 bis 20, vorzugsweise 0 bis 10 Gew.%, bezogen auf die Komponente A, besonders bevorzugt werden jedoch Formmassen, bei deren Herstellung keine dieser weiteren Comonomeren verwendet wurden.

Bei der Herstellung der modifizierten Polyphenylenether A können bis zu 20 Gew.%, bezogen auf A, an Radikalstartern eingesetzt werden.

Der Anteil der Radikalstarter ist in der Regel geringer als die Summe der verwendeten monomeren Verbindungen $a_2$. Im allgemeinen handelt es sich dabei um ein organisches Peroxid oder eine Azo-Verbindung. Verwendet werden können organische Peroxide mit einer Halbwertzeit im Bereich von 0,1 bis 3000 s bei 200 °C. Die Wahl des Radikalstarters richtet sich nach der gewünschten Reaktionstemperatur. Beispielsweise seien als Radikalstarter tert.-Butylperoxid und Dicumylperoxid genannt.

Häufig, insbesondere bei Temperaturen über 265 °C, hat es sich als vorteilhaft erwiesen, ohne Zugabe von Radikalstartern, d.h. in Abwesenheit oder praktischer Abwesenheit von Radikalstartern zu arbeiten. Dies gilt insbesondere dann, wenn als Komponente $a_2$ Fumarsäure eingesetzt wird, da hier bei der Verwendung von Radikalstartern unter Umständen unerwünschte Nebenreaktionen auftreten können.

Zur Herstellung des modifizierten Polyphenylenethers A werden die eingesetzten Komponenten in der Schmelze bei 250 bis 350 °C, vorzugsweise 265 bis 295 °C, miteinander umgesetzt. Hierzu eignen sich besonders Extruder, da in diesen im allgemeinen auch eine gute Durchmischung der Komponenten erzielt wird. Die mittleren Verweilzeiten liegen im allgemeinen im Bereich von 0,5 bis 30 min., vorzugsweise von 1 bis 5 min. Besonders gut für das erfindungsgemäße Verfahren eignen sich Zweischneckenextruder. Die Komponenten werden vorzugsweise gemeinsam eindosiert und in einem Aufschmelzteil aufgeschmolzen. Die Extruderschnecke im Aufschmelzteil enthält bevorzugt Knetelemente. An die Aufschmelzzone schließt sich die Reaktionszone an, die bevorzugt Knetelemente und zusätzlich Knetelemente mit nachgeschaltetem rückwärts förderndem Gewinde enthält. Vor dem Produktaustrag befindet sich bevorzugt eine Entgasungszone zur Entfernung der flüchtigen Bestandteile. Die ausgetragene Schmelze wird im allgemeinen granuliert und das Granulat wird zur Herstellung der erfindungsgemäßen Formmassen eingesetzt.

Prinzipiell ist die Herstellung des modifizierten Polyphenylenethers auch in jedem Reaktionsgefäß, welches eine Reaktion der Komponenten miteinander ermöglicht, durchführbar.

Als Komponente B werden in den erfindungsgemäßen Formmassen 2 bis 95,99, vorzugsweise 10 bis 84,9, insbesondere 24,9 bis 70 Gew.-Teile, bezogen auf die Summe der Komponenten A, B, C und D, eines thermoplastischen Copolymerisates B, eingesetzt.

B ist ein thermoplastisches Copolymerisat aus 30 bis 90,9, vorzugsweise 50 bis 90,5 Gew.% $b_{11}$, 9 bis 40, vorzugsweise 9 bis 35 Gew.% $b_{12}$, 0,1 bis 30, vorzugsweise 0,5 bis 15 Gew.% $b_{13}$, $b_{14}$, $b_{15}$ oder $b_{16}$ oder eines Gemisches mindestens zweier der Verbindungen $b_{13}$ bis $b_{16}$ und 0 bis 30, bevorzugt 0 Gew.% $b_{17}$, wobei die Gew.% auf das Copolymerisat B bezogen sind.

$b_{11}$ ist z.B. $\alpha$-Methylstyrol, p-Methylstyrol oder insbesondere Styrol selbst.

Als Beispiele für $b_{12}$ seien Methacrylnitril oder insbesondere Acrylnitril genannt.

Als Maleinsäurederivate $b_{13}$ kommen Maleinsäure selbst, ihre Halbamide, wobei der Stickstoff durch ein oder zwei $C_1$-$C_8$-Alkylreste substituiert sein kann, oder bevorzugt Maleinsäureanhydrid oder Monoester der Maleinsäure, abgeleitet von $C_1$-$C_8$-Alkanolen, in Betracht.

Als epoxidgruppenhaltiges ethylenisch ungesättigtes Monomeres $b_{14}$ ist prinzipiell jede mit $b_{11}$ und $b_{12}$ copolymerisierbare Verbindung geeignet, die eine Epoxidgruppe im Molekül aufweist.

In Betracht kommen unter anderem Monomere, die neben mindestens einer Epoxigruppe

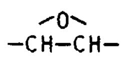

eine Vinylbenzol-, Acryloyl-, Methacryloyl-, Acrylamido- oder Methacrylamidogruppe enthalten. Beispielsweise können Glycidylacrylat und Glycidylmethacrylat sowie auch Glycidylallyl- und -vinylether verwendet werden.

Als $b_{15}$ kann das Copolymerisat B mindestens ein mit $b_{11}$ und $b_{12}$ copolymerisierbares ethylenisch ungesättigtes Monomeres einpolymerisiert enthalten, das mindestens eine Oxazolingruppe trägt.

Diese Monomeren haben vorzugsweise die allgemeine Formel V

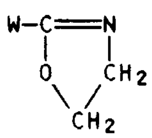

V,

wobei W eine polymerisierbare Doppelbindung enthält. Bevorzugte Substituenten W sind

$CH_2=CR^{21}-$ ,

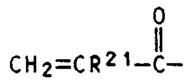 ,

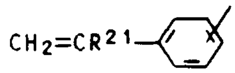 ,

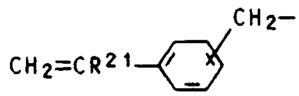 ,

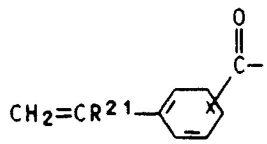 ,

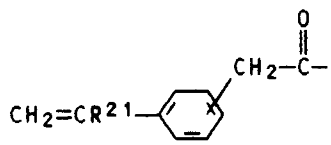

und 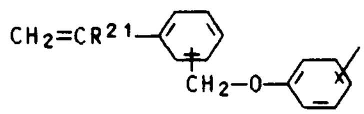 ,

wobei $R^{21}$ ein Wasserstoffatom oder eine Alkyl- oder Alkoxygruppe mit 1 bis 6 C-Atomen sein kann, z.B. Methyl, i- und n-Propyl oder Butyl-, um nur einige zu nennen. Besonders bevorzugte Monomere $b_{15}$ sind Vinyloxazoline der allgemeinen Formel VII

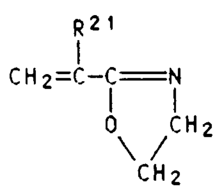 VII,

wobei $R^{21}$ die zuvor angegebene Bedeutung hat und vorzugsweise ein Wasserstoffatom oder eine Methylgruppe ist.

Als $b_{16}$ kommen die ethylenisch ungesättigten, mit $b_{11}$ und $b_{12}$ copolymerisierbaren Monomeren in Frage, die mindestens eine Hydroxylgruppe tragen. Bevorzugt ist eine Verbindung der allgemeinen Formel VI

$CH_2 = CR^{16} - K - OH$    VI,

wobei $R^{16}$ = H oder $C_1$- bis $C_{25}$-Alkyl und

K = 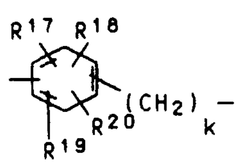 , 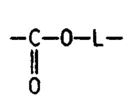 , 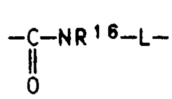 , 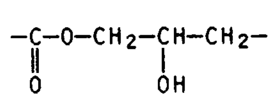 ,

ist, wobei $R^{17}$ bis $R^{20}$ = H, $C_1$- bis $C_8$-Alkyl oder CN und k = 0, 1 oder 2 aber auch 3 bis 6, ist, L ein Brückenglied bedeutet, wie $C_1$- bis $C_8$-Alkylen oder Cyclohexylen oder

$$L = -(CH_2)_f-O-[-\overset{\displaystyle O}{\overset{\|}{C}}(CH_2)_5-]_g- ,$$

wobei f = 2 bis 10 und g = 1 bis 10 ist oder

$$L = -(CH_2-CH_2-O-)_h-CH_2-CH_2- ,$$

$$L = -(CH_2-\underset{\displaystyle CH_3}{\underset{|}{C}}H-O)_h-CH_2-\underset{\displaystyle CH_3}{\underset{|}{C}}H- \quad \text{oder}$$

$$L = -(CH_2-CH_2-O)_h-(CH_2-\underset{\displaystyle CH_3}{\underset{|}{C}}H-O)_i-CH_2-\underset{\displaystyle R^{26}}{\underset{|}{C}}-$$

wobei h, i = 1, 2 oder 3 bis 20 ist und $R^{26}$ = H oder $CH_3$ ist, und $R^{16}$ = H oder $C_1$- bis $C_8$-Alkyl bedeutet.

Besonders bevorzugt sind Hydroxyalkylacrylate oder -methacrylate mit einem $C_1$-$C_8$-Alkylenrest.

Unter ethylenisch ungesättigten Monomeren $b_{17}$ werden solche Verbindungen verstanden, die mit $b_{11}$ und $b_{12}$ copolymerisierbar sind. Beispielsweise können Vinylester, Vinylether oder (Meth)acrylate, die sich von $C_1$-$C_8$-Alkoxygruppen ableiten, (Meth)acrylamid, wobei der Stickstoff durch $C_1$-$C_8$-Alkyl substituiert sein kann, und insbesondere Vinylacetat oder Methylmethacrylat eingesetzt werden.

Das Copolymerisat B weist im allgemeinen Viskositätszahlen, bestimmt in Dimethylformamid bei 25 °C nach DIN 53 726, von 0,5 bis 1,5 dl/g auf. Es kann in bekannter Weise in Lösung, Emulsion oder Masse kontinuierlich oder diskontinuierlich hergestellt werden.

Die Komponente C wird in Mengen von 2 bis 95,99, bevorzugt 5 bis 79,9, insbesondere 5 bis 40 Gew.-Teilen, bezogen auf die Summe von A, B, C und D, verwendet.

Es handelt sich um ein Pfropfmischpolymerisat aus Butadien- und/oder Acrylatkautschuken, die mit einer Monomermischung, enthaltend vinylaromatische und nitrilgruppenhaltige Verbindungen, gepfropft sind, wie sie allgemein als ABS- oder ASA-Polymerisate aus Ullmanns Encylopädie der technischen Chemie, 4. Auflage 1980, Bd. 19, S. 277 bis 295 bekannt sind, jedoch mit dem Unterschied, daß die zur Pfropfung verwendete Monomermischung zusätzlich geringe Mengen der oben beschriebenen Verbindungen $b_{13}$ bis $b_{17}$ enthält.

Der an sich bekannte Butadienkautschuk (EP-A 199 334) der die Pfropfgrundlage des Pfropfmischpolymerisates C bilden kann, hat eine Glastemperatur (nach K.H. Illers und H. Breuer, Kolloid-Zeitschrift 176, (1961), Seite 110) von unter 0 °C. Als Kautschuk kommen beispielsweise in Frage: Polybutadien (vgl. DE-A 14 20 775 und DE-A 14 95 089), daneben auch Copolymerisate aus überwiegend Butadien und Styrol mit Comonomeren wie Isopren, Acrylnitril oder Vinylmethylether.

Die Pfropfgrundlage kann auch ein an sich bekanntes (EP-A 201 763) Acrylatesterpolymerisat sein, dessen Glastemperatur unter 0 °C, bevorzugt unter -30 °C liegt. Als Monomere kommen als Hauptkomponente mit mehr als 50 Gew.%, bezogen auf das Acrylesterpolymerisat, Alkylacrylate mit 1 bis 8 C-Atomen im Alkylrest in Frage, wie n-Butylacrylat oder 2-Ethyl-hexyl-acrylat und gegebenenfalls auch noch bis zu 50, insbesondere 10 bis 20 Gew.%, bezogen auf das Acrylesterpolymerisat, eines weiteren copolymerisierbaren Monomeren wie Butadien, Isopren, Styrol, Acrylnitril oder Vinylmethylether oder Mischungen davon. Bevorzugt sind diese Acrylesterpolymerisate vernetzt. In diesem Falle enthält die Monomermischung 0,1 bis 5, bevorzugt 1 bis 4 Gew.%, bezogen auf das Acrylesterpolymerisat, von mehrfunktionellen Monomeren, wie Divinylbenzol oder Di-hydro-dicyclo-pentadienylacrylat.

Das Pfropfmischpolymerisat C ist im allgemeinen aufgebaut aus 30 bis 90, bevorzugt 40 bis 85, insbesondere 50 bis 80 Gew.% der Pfropfgrundlage und aus 10 bis 70, bevorzugt 15 bis 60, insbesondere 20 bis 50 Gew.%, jeweils bezogen auf das Pfropfmischpolymerisat, eines Copolymerisates als Pfropfhülle, das durch Polymerisation der bei B beschriebenen Monomermischung $b_{11}$ bis $b_{17}$ in Gegenwart der Pfropfgrundlage entsteht.

Sowohl der Kautschuk als auch die Pfropfmischpolymerisate werden üblicherweise nach bekannten Methoden in Lösung oder bevorzugt in Emulsion hergestellt, wobei die Pfropfung auch in bekannter Weise in mehreren Stufen erfolgen kann. Es entstehen Pfropfmischpolymerisate, bei denen das Copolymerisat als Pfropfhülle in dem Fachmann bekannten Grenzen auf die elastomere Grundlage gepfropft ist. Die Teilchengrößen der Pfropfmischpolymerisate können den Erfordernissen entsprechend nach bekannten Methoden bestimmt und eingestellt werden, z.B. bei der Emulsionspolymerisation mit Hilfe eines Saatlatex oder durch einen anschließenden Agglomerationsschritt. Üblicherweise sollte die mittlere Teilchengröße ($d_{50}$-Wert der integralen Massenverteilung, bestimmt nach der in DE-B 24 27 960 beschriebenen Methode) zwischen 0,05 und 1 µm, bevorzugt 0,1 und 0,7 µm bei Pfropfmischpolymerisaten, die in bekannter Weise in Emulsion hergestellt wurden, liegen oder zwischen 0,5 und 10 µm bei Produkten, die in bekannter Weise in Lösung hergestellt wurden.

Als Komponente D werden in den erfindungsgemäßen Formmassen 0,01 bis 10, bevorzugt 0,1 bis 5, insbesondere 0,1 bis 2 Gew.-Teile, bezogen auf die Summe von A, B, C und D, eine oder mehrere Verbindungen eingesetzt, die unter den Herstellbedingungen der Formmassen mit den Carbonylgruppen der Verbindungen $a_2$, B bzw. C reagieren können. Es werden Verbindungen eingesetzt, die mindestens zwei, bevorzugt zwei bis sechs, insbesondere zwei bis drei Substituenten aus der Gruppe der Hydroxyl-, Thiol-, Epoxid- und Aminoreste im Molekül enthalten.

Es ist selbstverständlich, daß D in halogenfreien, selbstverlöschenden Formmassen seinerseits bis auf Spuren frei von Halogen ist.

Zusätzlich zu diesen mehrfunktionellen reaktiven Verbindungen können auch Verbindungen mit nur einem der obengenannten reaktiven Substituenten eingesetzt werden, um die Reaktion der mehrfunktionellen Stoffe mit $a_2$, B bzw. C zu steuern, z.B. um eine zu enge Verknüpfung zwischen den Komponenten zu vermeiden. Ihre Menge hängt daher von den jeweiligen Reaktionsbedingungen und verwendeten Stoffen ab. Sie läßt sich für jeden Einzelfall durch einfache Vorversuche ermitteln, jedoch nur schwer in allgemein gültiger Form angeben. Nach bisherigen Erfahrungen können mit 10 bis 90, insbesondere mit 20 bis 80 Gew.% der monofunktionellen Verbindung, bezogen auf das Gemisch, gute Ergebnisse erzielt werden.

Als mehr- bzw. monofunktionelle Verbindungen können neben anderen Stoffe der allgemeinen Formel VIII

H - U - M - T    VIII

eingesetzt werden, in der

U    -O- und -NH-, daneben auch $-NR^{23}-$ oder

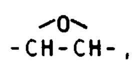

T    -H, -UH, $-UR^{23}$ oder $R^{23}$ und

M    ein Brückenglied bedeuten, wobei

$R^{23}$    $-CH_3$, daneben auch $-C_2$-$C_{12}$-Alkyl, Aryl, Aralkyl mit bis zu 12 C-Atomen ist,

und wobei das Brückenglied M und/oder der Rest $R^{23}$ durch mindestens eine -UH-Gruppe substituiert sein können.

Brückenglieder M sind zweiwertige aliphatische oder araliphatische Gruppen, die als Heteroatome Sauerstoff, Stickstoff enthalten oder Doppel- oder Dreifachbindungen aufweisen können.

Insbesondere sind lineare oder verzweigte Alkylen-, Cycloalkylen-, Aralkylen-, Arylen-, durch CO substituierte Alkylen-, Aralkylen- oder Arylreste sowie Alkenylen- oder Alkinylengruppen zu nennen, die noch durch die genannten Heteroatome unterbrochen sein können.

Einzelne Brückenglieder sind beispielsweise:

$-(CH_2)_u-$ , $-(CH_2)_p-CH{=}CH-$ , $-(CH_2)_p-C{\equiv}C-$, 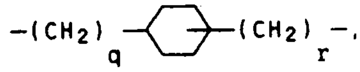,

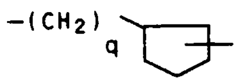, 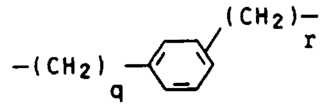, $-(CH_2)_2O$, $-(CH_2)_2O(CH_2)_2-$,

$-(CH_2)_3O(CH_2)_2-$, 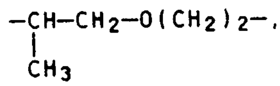, 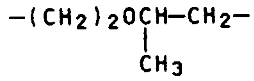, 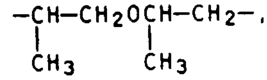,

$-(CH_2-CH_2-O)_o-CH_2-CH_2$, 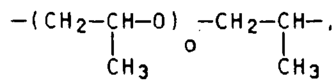, 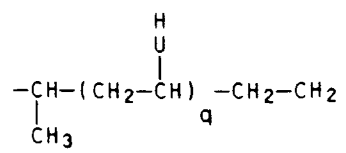,

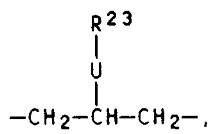, 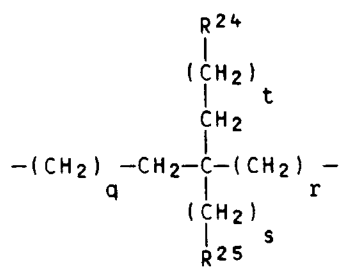 und

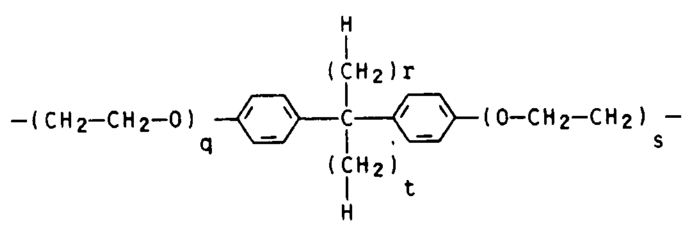

wobei

| | |
|---|---|
| $R^{24}$,$R^{25}$ | -H oder -UH, |
| o | 1 bis 50, bevorzugt 1, 2, 3, 8, 9, 10, 11, 12 |
| p | 1 bis 20, bevorzugt 1, 2, 3, 4, 5, 6 |
| q | 0 bis 4 |
| r | 0 bis 4 |
| s | 0 bis 4 und |
| t | 0 bis 4 |
| u | 2 bis 30, bevorzugt 2, 3, 4, 6, 10 bedeuten. |

Als einzelne Beispiele für Diole seien genannt: Ethylenglykol, Di-, Tri- oder Polyethylenglykol mit bis zu 50, bevorzugt 2, 3 oder 4 bis 12 Ethylenoxideinheiten, 1,2- und 1,3-Propandiol, Polypropylenglykol mit bis zu 50, bevorzugt 2, 3 oder 4 bis 12 Einheiten, 1,4-, 2,3-, 1,3-Butandiol, 1,5-Pentandiol, 1,6-Hexandiol, 1,10-Decandiol, 1,12-Octadecandiol, 2,2-Dimethylpropandiol-(1,3), Glycerinmonomethylester, Cyclohexyldiol, Cyclohexandimethanol, Hydrochinon, Brenzkatechin oder Bisphenol A.

Es können auch Polyole wie Glycerin, Pyrogallol, Pentaerythrit, Trimethylolpropan sowie Kondensationsprodukte solcher Polyole oder auch Kohlenhydrate wie Sorbit, Mannit, Saccharide oder auch Polysaccharide eingesetzt werden.

Als mehrfunktionelle Amine können beispielsweise diejenigen eingesetzt werden, die zur Herstellung

von Polyurethanen aus Houben-Weyl, "Methoden der organischen Chemie", Band XIV/2, 1963, S. 95 bis 98, bekannt sind. Als einzelne Vertreter seien genannt Ethylen-, Propylendiamin, Tetra-, Penta-, Hexamethylendiamin, Piperazin und 4,4′-Diaminodicyclohexylmethan.

Als Thiole sind die ein- oder mehrfunktionellen Thiole einsetzbar, die aus Houben-Weyl, "Methoden der organischen Chemie", Band IX, 1955, S. 3 bis 42 bekannt sind. Als Beispiele für Dithiole seien aliphatische Dithiole mit $C_2$- bis $C_{12}$-Alkylenresten, 1,4-Dimercaptobenzol und Biphenyl-4,4′-dithiol genannt.

Als Epoxide können beispielsweise die mehrfunktionellen Epoxide niederen und hohen Molekulargewichts eingesetzt werden, die aus Ullmanns "Enzyclopädie der technischen Chemie", Band 10, 1975, S. 563 bis 579 bekannt sind. Als einzelne Vertreter der niedermolekularen Diepoxide seien genannt Diglycidylether des Bisphenol-A, 4,4′-Dihydroxy-diphenyl-diglycidylether,

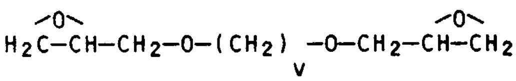 mit v = 2 bis 12,

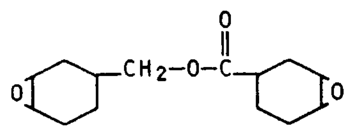 , 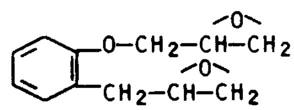 ,

Butadiendioxid (1,2,3,4-Diepoxibutan), Pentadiendioxid, Dicyclopentadiendioxid und 1,4-Bisepoxiethylbenzol.

Daneben können auch mehrfunktionelle Verbindungen mit unterschiedlichen funktionellen Gruppen wie Glycerindiglycidylether eingesetzt werden.

Die erfindungsgemäßen Formmassen können, wenn sie halogenfrei sind, mit 1 bis 40, insbesondere 2 bis 25, besonders bevorzugt 3 bis 20 Gew.%, bezogen auf die Formmasse, einer Phosphor enthaltenden Verbindung E flammfest ausgerüstet sein.

Es handelt sich dabei um organische und anorganische Phosphor enthaltende Verbindungen, in denen der Phosphor die Wertigkeitsstufe -3 bis +5 besitzt. Unter der Wertigkeitsstufe soll der Begriff "Oxidationsstufe" verstanden werden, wie er im Lehrbuch der Anorganischen Chemie von A.F. Hollemann und E. Wiberg, Walter de Gruyter und Co. (1964, 57. bis 70. Auflage), Seite 166 bis 177, wiedergegeben ist. Phosphorverbindungen der Wertigkeitsstufen -3 bis +5 leiten sich von Phoshin (-3), Diphosphin (-2), Phosphinoxid (-1), elementarem Phosphor (±0), hypophosphoriger Säure (+1), phosphoriger Säure (+3), Hypodiphosphorsäure (+4) und Phosphorsäure (+5) ab.

Aus der großen Zahl von geeigneten phosphorhaltigen Verbindungen seien nur einige Beispiele erwähnt.

Beispiele für Phosphorverbindungen der Phosphin-Klasse, die die Wertigkeitsstufe -3 aufweisen, sind aromatische Phosphine, wie Triphenylphosphin, Tritolylphosphin, Trinonylphosphin, Trinaphthylphosphin u.a. Besonders geeignet ist Triphenylphosphin.

Beispiele für Phosphorverbindungen der Diphosphinklasse, die die Wertigkeitsstufe -2 aufweisen, sind Tetraphenyldiphosphin, Tetranaphthyldiphosphin u.a. Besonders geeignet ist Tetranaphthyldiphosphin.

Phosphorverbindungen der Wertigkeitsstufe -1 leiten sich vom Phosphinoxid ab. Beispiele sind Triphenylphosphinoxid, Tritolylphosphinoxid, Trinonylphosphinoxid, Trinaphthylphosphinoxid. Bevorzugt ist Triphenylphosphinoxid.

Phosphor der Wertigkeitsstufe ±0 ist der elementare Phosphor. In Frage kommen roter und schwarzer Phosphor. Bevorzugt ist roter Phosphor.

Phosphorverbindungen der "Oxidationsstufe" +1 sind z.B. Hypophosphite. Sie können Salzcharakter haben oder rein organischer Natur sein.

Beispiele sind Calciumhypophosphit und Magnesiumhypophosphit, daneben auch komplexe Hypophosphite oder Doppelhypophosphite, oder organische Hypophosphite wie Cellulosehypophosphitester oder Ester der hypophosphorigen Säuren mit Diolen, wie z.B. von 1,10-Dodecyldiol. Auch substituierte Phosphinsäuren und deren Anhyride, wie z.B. Diphenylphosphinsäure, können eingesetzt werden. Auch Melaminhypophosphit ist geeignet. Des weiteren kommen in Frage Diphenylphosphinsäure, Di-p-Tolylphosphinsäure, Di-Kresylphosphinsäureanhydrid. Es kommen aber auch Verbindungen wie Hydrochinon-, Ethylenglykol-, Propylenglykol-bis(diphenylphosphinsäure)ester u.a. in Frage. Ferner sind geeignet Aryl(Alkyl)-phosphinsäureamide, wie z.B. Diphenylphosphinäsure-dimethylamid und Sulfonamidoaryl(alkyl)-phosphinsäurederivate, wie z.B. p-Tolylsulfonamidodiphenylphosphinsäure. Bevorzugt eingesetzt werden Hydrochinon- und Ethylenglykol-bis-(diphenylphosphinsäure)ester.

Phosphorverbindungen der Oxidationsstufe +3 leiten sich von der phosphorigen Säure ab. Geeignet sind cyclische Phosphonate, die sich vom Pentaerythrit, Neopentylglykol oder Brenzkatechin ableiten. Ferner ist Phosphor der Wertigkeitsstufe +3 in Triaryl(alkyl)phosphiten, wie z.B. Triphenylphosphit, Tris-(4-decylphenyl)phosphit, Tris(2,4-di-tert.-butylphenyl)phosphit oder Phenyldidecylphosphit u.a. enthalten. Es können aber auch Diphosphite, wie z.B. Propylenglykol-1,2-bis(diphosphit) oder cyclische Phosphite, die sich vom Pentaerythrit, Neopentylglykol oder Brenzkatechin ableiten, in Frage.

Bevorzugt werden Methylneopentylphosphonat (Methanphosphonsäuremethylester) und -phosphit sowie Dimethylpentaerythritdiphosphonat und -phosphit.

Als Phosphorverbindungen der Oxidationsstufe +4 kommen vor allem Hypo diphosphate, wie z.B. Tetraphenylhypodiphosphat oder Bisneopentylhypodiphosphat in Betracht.

Als Phosphorverbindungen der Oxidationsstufe +5 kommen vor allem alkyl- und arylsubstituierte Phosphate in Betracht. Beispiele sind Phenylbisdodecylphosphat, Phenylethylhydrogenphosphat, Phenyl-bis(3,5,5-trimethylhexyl)phosphat, Ethyldiphenylphosphat, 2-Ethylhexyldi(tolyl)phosphat, Diphenylhydrogenphosphat,Bis(2-ethylhexyl)-p-tolylphosphat, Tritolylphosphat, Bis(2-ethylhexyl)-phenylphosphat, Di(nonyl)-phenylphosphat, Phenylmethylhydrogenphosphat, Di(dodecyl)-p-tolylphosphat, p-Tolyl-bis(2,5,5-trimethylhexyl)phosphat, 2-Ethylhexyldiphenylphosphat. Besonders geeignet sind Phosphorverbindungen, bei denen jeder Rest ein Aryloxi-Rest ist. Ganz besonders geeignet ist Triphenylphosphat.

Des weiteren können auch cyclische Phosphate eingesetzt werden. Besonders geeignet ist hierbei Diphenylpentaerythritdiphosphat und Phenylneopentylphosphat.

Außer den oben angeführten niedermolekularen Phosphorverbindungen kommen noch oligomere und polymere Phosphorverbindungen in Frage.

Solche polymeren, halogenfreien, organischen Phosphorverbindungen mit Phosphor in der Polymerkette entstehen beispielsweise bei der Herstellung von pentacyclischen, ungesättigten Phosphindihalogeniden, wie es beispielsweise in der DE-A 20 36 173 beschrieben ist. Das Molekulargewicht, gemessen durch Dampfdruckosmometrie in Dimethylformamid, der Polyphospholinoxide soll im Bereich von 500 bis 7000, vorzugsweise im Bereich von 700 bis 2000 liegen.

Der Phosphor besitzt hierbei die Oxidationsstufe -1.

Ferner können anorganische Koordinationspolymere von Aryl(Alkyl)-phosphinsäuren, eingesetzt werden. Ihre Herstellung wird in DE-A 31 40 520 angegeben. Der Phosphor besitzt diie Oxidationszahl +1.

Weiterhin können solche halogenfreien polymeren Phosphorverbindungen eingesetzt werden, die durch die Reaktion eines Phosphonsäurechlorids, wie z.B. Phenyl-, Methyl-, Propylphosphonsäuredichlorid mit bifunktionellen Phenolen, wie z.B. Hydrochinon, Resorcin, 2,3,5-Trimethylhydrochinon, Bisphenol-A, Tetramethylbisphenol-A entstehen.

Weitere halogenfreie polymere Phosphorverbindungen, die in den erfindungsgemäßen Formmassen enthalten sein können, werden durch Reaktion von Phosphoroxidtrichlorid oder Phosphorsäureesterdichloriden mit einem Gemisch aus mono-, bi- und trifunktionellen Phenolen und anderen Hydroxylgruppen tragenden Verbindungen hergestellt (vgl. Houben-Weyl-Müller, Thieme-Verlag Stuttgart, Organische Phosphorverbindungen Teil II (1963)). Ferner können halogenfreie polymere Phosphonate durch Umesterungsreaktionen von Phosphonsäureestern mit bifunktionellen Phenolen (vgl. DE-A 29 25 208) oder durch Reaktionen von Phosphonsäureestern mit Diaminen oder Diamiden oder Hydraziden (vgl. US-PS 4 403 075) hergestellt werden. In Frage kommt aber auch das anorganische Poly(ammoniumphosphat).

Es können auch oligomere Pentaerythritphosphite, -phosphate und -phosphonate gemäß EP-B 8 486, z.B. Mobil Antiblaze® 19 (eingetragenes Warenzeichen der Firma Mobil Oil) verwendet werden.

Ganz besonders bevorzugt zum Einsatz gelangen Triphenylphosphinoxid, Triphenylphosphat, Methylneopentylphosphat (Methanphosphonsäureneopentylester), Mobil Antiblaze® 19 und Hydrochinon-bis-(diphenylphosphinsäure)-ester.

Zusätzlich kann in den erfindungsgemäßen Formmassen als Komponente F ein nichtmodifizierter Polyphenylenether eingesetzt werden. Dieser entspricht bevorzugt dem in Komponente $a_1$ eingesetzten Polyphenylenether, weshalb hier auf die dortigen Ausführungen zu geeigneten Verbindungen verwiesen wird. Der Anteil der Komponente F kann vom 0,1fachen bis zum 10fachen, bevorzugt bis zum 4fachen, insbesondere bis zum 2fachen der Gewichtsmenge betragen, in der die Komponente A in der erfindungsgemäßen Formmasse vorliegt.

Als weiterer Bestandteil G können in den erfindungsgemäßen Formmassen gegebenenfalls vinylaromatische Polymere eingesetzt werden. Geeignet als G sind solche Polymere, wie sie bereits in Komponente $a_1$ beschrieben wurden. Für nähere Einzelheiten sei deshalb auf die Ausführungen zur Komonente $a_1$ verwiesen.

Die Komponente G kann auch schlagzäh modifiziert sein. Solche Polymere sind dem Fachmann als schlagzähes Polystyrol (HIPS) bekannt. Dabei werden die vinylaromatischen Polymeren in Gegenwart eines

kautschukhaltigen Polymeren hergestellt. Als kautschukartige Polymere seien beispielsweise Polybutadien- und Polyisopren-Kautschuk genannt.

Die üblicherweise zur Herstellung schlagzähmodifizierter Styrolpolymerisate angewandten Verfahren sind die Polymerisation in Masse oder Lösung, wie beispielsweise in der US-Patentschrift 2 694 692 beschrieben. Die schlagzäh modifizierten Styrolpolymerisate (HIPS) weisen im allgemeinen einen Schmelzindex (MFI (200°C/5 kg), gemessen nach DIN 53 735) von 2 bis 30, insbesondere von 2,5 bis 20 g/10 min auf.

Der Anteil an G kann vom 0,1fachen bis zum 4,0fachen, bevorzugt bis zum 2,0fachen der Gewichtsmenge der Summe der in der Formmasse vorliegenden Komponenten A und, falls vorhanden, F betragen. Bei halogenfreien, selbstverlöschenden phosphorhaltigen Formmassen ist es insbesondere günstig, geringere Mengen an G, nämlich bis zum 0,5fachen der Gewichtsmenge der Summe der in der Formmasse vorliegenden Komponenten A und, falls vorhanden, F zu verwenden.

Als weiteren Bestandteil können die Formmassen die Komponente H enthalten.

Der Anteil an H in der Formmasse kann vom 0,1fachen bis zum 10fachen, bevorzugt bis zum 4fachen, insbesondere bis zum 2fachen der Gewichtsmenge betragen, in der die Komponente B in der erfindungsgemäßen Formmasse vorliegt. H ist ein Copolymerisat aus mindestens 50 Gew.%, bezogen auf H, eines vinylaromatischen Kohlenwasserstoffs mit 8 bis 12 C-Atomen, wie $\alpha$-Methylstyrol, para-Methylstyrol, oder insbesondere Styrol selbst und einem nitrilgruppenhaltigen, ethylenisch ungesättigten Monomeren mit 3 bis 6 C-Atomen, insbesondere Acrylnitril oder Methacrylnitril. Es enthält bevorzugt 15 bis 40, insbesondere 20 bis 38 Gew.%, bezogen auf H, der einpolymerisierten Nitrilmonomeren. Es kann ferner noch bis zu 10 Gew.%, bezogen auf H, Monomere wie Methacrylsäureester, Acrylsäureester z.B. Methylmethacrylat oder Ethylmethacrylat, Butylacrylat oder 2-Ethylhexylacrylat sowie Methacrylamide oder Acrylamide oder Gemische dieser Verbindungen einpolymerisiert enthalten.

Diese Copolymerisate H sind an sich bekannt und im Handel erhältlich. Sie werden in üblicher Weise in Lösung, Emulsion oder Masse kontinuierlich oder diskontinuierlich hergestellt. Das Copolymerisat H weist im allgemeinen Viskositätszahlen von 0,5 bis 1,5 dl/g auf.

Darüber hinaus können die Formmassen die Komponente I enthalten.

Der Anteil an I in der Formmasse kann vom 0,1fachen bis zum 10fachen, bevorzugt bis zum 4fachen, insbesondere bis zum 2fachen der Gewichtsmenge betragen, in der die Komponente C in der erfindungsgemäßen Formmassen vorliegt.

Bei der Komponente I handelt es sich um die an sich bekannten ABS- und ASA-Polymerisate, die oben in Zusammenhang mit der Komponente C beschrieben wurden. I ist im allgemeinen ein Pfropfmischpolymerisat aus 30 bis 90, bevorzugt 40 bis 85, insbesondere 55 bis 78 Gew.%, bezogen auf das Pfropfmischpolymerisat, eines Butadien- oder Acrylatkautschukes, auf den 10 bis 70, bevorzugt 15 bis 60, insbesondere 22 bis 45 Gew.%, bezogen auf das Pfropfmischpolymerisat, einer Monomermischung, enthaltend vinylaromatische und nitrilgruppenhaltige Verbindungen, als Pfropfhülle pfropfmischpolymerisiert sind.

Die an sich bekannten Butadien- oder Acrylatkautschuke entsprechen den unter C angegebenen Beschreibungen, so daß sich hier weitere Erläuterungen erübrigen.

Die Monomermischung, aus der die Pfropfhülle entsteht, enthält 60 bis 93 Gew.%, bezogen auf die Monomermischung, des Monomeren $b_{11}$ und 7 bis 40 Gew.%, bezogen auf die Monomermischung, des Monomeren $b_{12}$, das seinerseits bis zur Hälfte durch Methylmethacrylat ersetzt sein kann.

In ihrer Herstellung, dem Pfropfgrad und der Teilchengröße entspricht die Komponente I den an sich bekannten Methoden und Eigenschaften, wie sie für das Pfropfmischpolymerisat C beschrieben wurden, so daß eine Erläuterung hier entbehrlich ist.

Darüber hinaus können die erfindungsgemäßen thermoplastischen Formmassen auch übliche Zusatzstoffe und Verarbeitungshilfsmittel enthalten. Der Anteil dieser Zusätze beträgt im allgemeinen nicht mehr als 40, insbesondere nicht mehr als 20 Gew.-Teile, bezogen auf 100 Gew.-Teile der Summe aus A, B, C und D.

Als Zusatzstoffe seien genannt übliche Hitze- und Lichtstabilisatoren, Gleit- und Entformungsmittel, Färbemittel, wie Farbstoffe und Pigmente in üblichen Mengen. Weitere Zusatzstoffe sind Verstärkungsmittel wie Glasfasern, Kohlenstoff-Fasern, aromatische Polyamidfasern und/oder Füllstoffe, Gipsfasern, synthetische Calciumsilikate, Kaolin, calciniertes Kaolin, Wollastonit, Talkum, Kreide, ferner bei halogenhaltigen Formmassen Flammschutzmittel z.B. bromierte oder chlorierte organische Verbindungen, gegebenenfalls in Mischung mit Antimon-Verbindungen.

Die Herstellung der erfindungsgemäßen thermoplastischen Formmassen erfolgt zweckmäßigerweise durch Mischen der Komponenten bei Temperaturen im Bereich von 200 bis 320°C, vorzugsweise 250 bis 300°C in üblichen Mischvorrichtungen, wie z.B. Knetern, Banburymischern und Einschneckenextrudern, vorzugsweise in einem Zweischneckenextruder. Um eine möglichst homogene Formmasse zu erhalten, ist

eine intensive Durchmischung notwendig, was in bekannter Weise erreicht werden kann. Die mittleren Verweilzeiten beim Mischen liegen im Bereich von 0,5 bis 30 min, vorzugsweise von 1 bis 5 min. Die Reihenfolge des Mischens der Komponenten kann variiert werden, es können zwei oder gegebenenfalls drei Komponenten vorgemischt sein oder es können auch alle Komponenten gemeinsam gemischt werden.

Aus den erfindungsgemäßen Formmassen lassen sich durch Spritzgießen oder Extrusion Formkörper mit vorteilhaften Eigenschaften herstellen.

Unter einer selbstverlöschenden Formmasse im Sinne dieser Erfindung wird eine flammfest ausgerüstete Formmasse verstanden, die in die im folgenden beschriebenen Brandklassen UL 94 V0, V1 oder 5V eingeordnet werden kann.

Die erfindungsgemäßen thermoplastischen Formmassen zeichnen sich durch eine gute Verarbeitbarkeit und Wärmeformbeständigkeit aus. Weitere Vorteile liegen in den guten mechanischen Eigenschaften der Formmasse und der daraus hergestellten Formkörper, daneben auch in deren Oberflächenglanz.

Die in den Beispielen und Vergleichsversuchen erwähnten Tests wurden wie folgt durchgeführt:

1. Die Flammschutzprüfung erfolgt im vertikalen Brandtest nach den Vorschriften der Unterwriter Laboratories zwecks Einordnung in eine der Brandklassen UL 94 V0, V1, V2 oder 5V.

Die Einstufung eines flammgeschützten Thermoplasten in die Brandklasse UL 94 V0 erfolgt, wenn folgende Kriterien erfüllt sind: Bei einem Satz von 5 Proben der Abmessungen 127×12,7×3,16 mm dürfen alle Proben nach zweimaliger Beflammung von 10 s Zeitdauer mit einer offenen Flamme (Höhe 19 mm) nicht länger als 10 s nachbrennen. Die Summe der Nachbrennzeiten bei 10 Beflammungen von 5 Proben darf nicht größer sein als 50 s. Es darf kein brennendes Abtropfen, vollständiges Abbrennen oder ein Nachglühen von länger als 30 s erfolgen. Die Einstufung in die Brandklasse UL 94 V1 erfordert, daß die Nachbrennzeiten nicht länger als 30 s sind und daß die Summe der Nachbrennzeiten von 10 Beflammungen von 5 Proben nicht größer als 250 s ist. Das Nachglühen darf nie länger als 60 s dauern. Die übrigen Kriterien sind identisch mit den oben erwähnten. Eine Einstufung in die Brandklasse UL 94 V2 erfolgen dann, wenn es bei Erfüllung der übrigen Kriterien zur Einstufung UL 94 V1 zu brennendem Abtropfen kommt.

Eine Einstufung in die Brandschutzklasse UL 94 5V erfolgen dann, wenn folgende Kriterien erfüllt sind:

Die Nachbrenn- oder Nachglühzeit der Proben darf jeweils nach der letzten Beflammung 60 s nicht überschreiten. Dabei wird jede Probe fünfmal mit einer Flamme von 127 mm Höhe und einem inneren blauen Kegel von 38 mm Höhe 5 s lang beflammt. Zwischen zwei aufeinanderfolgenden Beflammungen liegt jeweils ein Intervall von 5 s. Es darf weder brennendes noch nicht brennendes Abtropfen noch vollständiges Abbrennen eintreten.

2. Die (Kerb)schlagzähigkeiten wurden nach DIN 53 453 gemessen.

3. Die Viskositätszahlen (VZ) wurden nach DIN 53 726 bestimmt, und zwar, wenn nicht anders angegeben, in Dimethylformamid bei 25 °C.

Zur Ausführung von Beispielen und Vergleichsversuchen wurden folgende Komponenten verwendet:

Komponente A

A(1): 9,25 kg Poly-2,6-dimethyl-1,4-phenylenether mit einer relativen Viskosität von 0,61 (gemessen in 1 gew.%iger Lösung in $CHCl_3$ bei 25 °C), 0,5 kg Polystyrol (PS 144 C mit einem MFI (200 °C/5 kg Last) von 24 g/10 min) und 0,25 kg Maleinsäureanhydrid wurden in einen Zweischneckenextruder (ZSK 53; Werner & Pfleiderer) dosiert, in einem ersten Teil unter Verwendung von Knetelementen bei 280 °C aufgeschmolzen, in einem zweiten Teil unter Kneten und Verwendung von Knetelementen bei 280 °C umgesetzt und anschließend in einer Entgasungszone bei 280 °C durch Anlagen von Vakuum entgast. Die mittlere Verweilzeit im Extruder betrug 3 min. Die austretende Schmelze wurde durch ein Wasserbad geleitet, granuliert und getrocknet.

A(2): 9.8 kg des in A(1) verwendeten PPE's und 0.5 kg des in A(1) verwendeten Polystyrols wurden mit 0,2 kg Fumarsäure wie bei A(1) umgesetzt.

Komponente B

Die in Tabelle 1 zusammengefaßten Komponenten B wurden nach der folgenden allgemeinen Arbeitsvorschrift hergestellt:

Die in Tabelle 1 angegebenen Monomerengemische wurden unter Zusatz von 20 bis 80 Gew.-Teilen Ethylbenzol, bezogen auf 100 Gew.-Teile der Monomeren, innerhalb von 4 bis 8 Stunden Verweilzeit bei

Temperaturen zwischen 120 und 180°C und einem Druck zwischen 4 und 10 bar polymerisiert. Als Kettenübertragungsmittel dienten 0,1 bis 2,0 Gew.-Teile tert.-Dodecylmercaptan, bezogen auf 100 Gew.-Teile der Monomeren, das während der Polymerisation kontinuierlich zudosiert wurde. Die entstehenden Copolymeren wurden über einen Extruder entgast und als Granulat gewonnen.

Tabelle 1

| Copolymerisate B | | | | | |
|---|---|---|---|---|---|
| | Gehalt an Styrol[1] | Gehalt an Acrylnitril[1] | Gehalt an | | Viskositätszahl |
| | | | | [Gew.%][1] | [dl/g] |
| B(1) | 70 | 27 | Maleinsäuremonomethylester | 3 | 0,85 |
| B(2) | 75 | 20 | Maleinsäureanhydrid | 5 | 0,91 |
| B(3) | 80 | 18 | Maleinsäuremonoethylester | 2 | 0,78 |
| B(4) | 70 | 28 | Maleinsäuremonomethylester | 2 | 0,88 |
| B(5) | 84 | 10 | Maleinsäureanhydrid | 6 | 0,90 |

1) Gew.% bezogen auf Copolymerisat

Komponente C

Die in Tabelle 2 zusammengefaßten Komponenten C wurden nach der folgenden allgemeinen Arbeitsvorschrift hergestellt:

a) Butadienkautschuk

Die Herstellung des Butadienkautschuks erfolgte durch Polymerisation von 60 Gew.-Teilen Butadien in Gegenwart einer Lösung von 0,5 Gew.-Teilen tert.-Dodecylmercaptan, 0,7 Gew.-Teilen Natrium-$C_{14}$-$C_{18}$-Alkylsulfonat als Emulgator, 0,2 Gew.-Teilen Kaliumperoxidsulfat und 0,2 Gew.-Teilen Natriumpyrophosphat in 80 Gew.-Teilen Wasser bei 65°C. Nach Beendigung der Polymerisation wurde der Polymerisations-Autoklav entspannt. Der Umsatz betrug 98 %.

Es wurde ein Polybutadien-Latex erhalten, dessen mittlere Teilchengröße ($d_{50}$-Wert) bei 0,1 µm liegt. Dieser Latex wurde durch Zusatz von 25 Gew.-Teilen einer wäßrigen Dispersion eines Copolymeren aus 96 Gew.% Ethylacrylat und 4 Gew.% Acrylsäureamid mit einem Feststoffgehalt von 10 Gew.% agglomeriert, wobei ein Polybutadien-Latex mit einer mittleren Teilchengröße ($d_{50}$-Wert) von 0,3 bis 0,4 µm entstand.

b) Acrylatkautschuk

Die Herstellung des Acrylatkautschuks verlief über zwei Schritte. Zunächst wurde ein Saatlatex hergestellt, mit dem anschließend der die Pfropfgrundlage bildende Acrylatkautschuk erzeugt wurde.

Herstellung des Saatlatex

16 Gew.-Teile Butylacrylat und 0,4 Gew.-Teile Di-cyclo-dihydro-pentadienylacrylat wurden in 150 Gew.-Teilen Wasser unter Zusatz von 0,5 Gew.-Teilen des Natriumsalzes einer $C_{12}$-$C_{18}$-Paraffinsulfonsäure, 0,3 Gew.-Teilen Kaliumperoxid, 0,3 Gew.-Teilen Natriumhydrogencarbonat und 0,15 Gew.-Teilen Natriumpyrophosphat unter Rühren auf 60°C erwärmt. 10 Minuten nach dem Anspringen der Polymerisationsreaktion wurden innerhalb von 3 Stunden eine Mischung aus 82 Gew.-Teilen Butylacrylat und 1,6 Gew.-Teilen Dicyclo-dihydro-pentadienyl-acrylat zugegeben. Nach Beendigung der Monomerzugabe wurde noch 1 Stunde nachreagieren gelassen. Der erhaltene Latex des vernetzten Butylacrylat-Polymerisats hatte einen Feststoffgehalt von 40 Gew.%. Die mittlere Teilchengröße ($d_{50}$-Wert) wurde zu 0,2 µm ermittelt.

Herstellung des Acrylatkautschuks

Zu einer Vorlage aus 2,5 Gew.-Teilen des vorstehend beschriebenen Saatlatex wurden nach Zugabe

von 50 Gew.-Teilen Wasser und 0,1 Gew.-Teilen Kaliumperoxidsulfat im Verlauf von 3 Stunden einerseits eine Mischung aus 49 Gew.-Teilen Butylacrylat und 1 Gew. -Teil Di-cyclodihydro-pentadienylacrylat und andererseits eine Lösung von 0,5 Gew.-Teilen des Natriumsalzes einer $C_{12}$-$C_{18}$-Paraffinsulfonsäure in 25 Gew.-Teilen Wasser bei 60° C zulaufen gelassen. Nach Zulaufende wurde 2 Stunden nachpolymerisiert. Der erhaltene Latex des vernetzten Butylacrylat-Polymerisats hatte einen Feststoffgehalt von 40 Gew.%. Die mittlere Teilchengröße ($d_{50}$-Wert) des Latex wurde zu 0.4 µm ermittelt.

c) Pfropfmischpolymerisate C

150 Gew.-Teile des Latex a) bzw. b) wurden mit 15 bis 100 Gew.-Teilen Wasser verdünnt und unter Zusatz von 0,3 Gew.-Teilen eines Natrium-$C_{14}$-$C_{18}$-Alkylsulfonats und 0,2 Gew.-Teilen Kaliumperoxodisulfat mit den in Tabelle 2 angegebenen Monomerengemischen bei 70° C innerhalb von 5 bis 7 Stunden gepfropft. Der mittlere Teilchendurchmesser ($d_{50}$-Wert) der Polymerisate C(1) und C(2) betrug 0,3 bis 0,4 µm, der von C(3) lag zwischen 0,4 und 0,5 µm.

Die Produkte wurden mit Calciumchlorid-Lösung aus der Dispersion gefällt, mit Wasser gewaschen und im warmen Luftstrom getrocknet.

Tabelle 2

| Pfropfmischpolymerisate C | | | | | |
|---|---|---|---|---|---|
| | Pfropfgrundlage | | Pfropfhülle | | |
| | Art | Menge[1)] | Monomeres 3 | Gewichtsverhältnis Styrol zu Acrylnitril zu Monomerem 3 in der Pfropfhülle | Menge[1)] |
| C(1) | a) | 60 | Maleinsäureanhydrid | 80/17/3 | 40 |
| C(2) | a) | 70 | Maleinsäuremonomethylester | 70/28/2 | 30 |
| C(3) | b) | 65 | Maleinsäureanhydrid | 75/20/5 | 35 |

[1)] Gew.%, bezogen auf Pfropfmischpolymerisat

Komponente D

D(1) Hexandiol-1,6
D(2) Hexamethylendiamin
D(3) technisches Gemisch aus Polyethylenoxiden mit 8 bis 12 Ethylenoxideinheiten
D(4) Glycerindiglycidylether

Komponent E

E(1) Triphenylphosphinoxid
E(2) Triphenylphosphat

Komponente F

Poly-2,6-dimethyl-1,4-phenylenether mit einer relativen Viskosität von 0,61 (gemessen in 1 gew.%iger Lösung in $CHCl_3$ bei 25° C).

Komponente G

Hochschlagzähes Polystyrol (HIPS) mit einem Gehalt von 8 Gew.% Butadien und einem Schmelzindex (200° C/5,0 kg) von 15 g/10 min (Buna®CB NX 529 C, (® = eingetragenes Warenzeichen der Firma Bayer).

Komponente H

H(1): Styrol-Acrylnitril-Copolymerisat, hergestellt aus einer Monomermischung aus 75 Gew.% Styrol

und 25 Gew.% Acrylnitril durch kontinuierliche radikalische Polymerisation, mit einer VZ von 1,01 dl/g.

H(2): Styrol-Acrylnitril-Copolymerisat, hergestellt aus einer Monomermischung aus 65 Gew.% Styrol und 35 Gew.% Acrylnitril durch kontinuierliche radikalische Polymerisation, mit einer VZ von 0,8 dl/g.

Komponente I

Es wurden die in Tabelle 3 zusammengefaßten Emulsionspfropfmischpolymerisate mit einer aus Styrol und Acrylnitril hergestellten Pfropfhülle verwendet.

Tabelle 3

| | Pfropfmischpolymerisat I | | | |
|---|---|---|---|---|
| | Pfropfgrundlage | | Pfropfhülle | |
| | Art | Menge [Gew.%, bez. auf Pfropfmischpolym.] | Gewichtsverhältnis Styrol zu Acrylnitril | Menge [Gew.%, bez. auf Pfropfmischpolymerisat] |
| I(1) | a)[1)] | 60 | 70/30 | 40 |
| I(2) | b)[1)] | 65 | 75/25 | 35 |
| I(3) | a)[1)] | 60 | 65/35 | 40 |
| I(4) | b)[1)] | 70 | 72/28 | 30 |

[1)] wie in Tabelle 1

Zu Vergleichszwecken wurden folgende Polyphenylenether und SAN-Polymere enthaltende Pfropfpolymerisate gemäß der EP-A 170 946 (V(1)), DE-A 3 432 749 (V(2)) und DE-A 3 526 549 (V(3)) hergestellt:

V(1) 100 g von F wurden mit Dimethyldichlorsilan in Toluol unter Verwendung von Tributylamin als Säurefänger umgesetzt. Das Umsetzungsprodukt wurde anschließend zu 100 g eines Styrolacrylnitrilpolymerisats (bestehend aus 62 Gew.% Styrol, 35 Gew.% Acrylnitril und 3 Gew.% Hydroxybutylacrylat mit einem Gewichtsmittel des Molekulargewichts von 65000, hergestellt durch kontinuierliche Polymerisation) unter Verwendung von Tributylamin als Säurefänger zudosiert. Es wurde wie üblich aufgearbeitet.

V(2) 100 g F wurden mit Dimethyldichlorsilan im Toluol unter Verwendung von Tributylamin als Säurefänger umgesetzt. Das Umsetzungsprodukt wurde anschließend zu 100 g eines Styrolacrylanitrilpolymerisates (bestehend aus 62 Gew.% Styrol, 35 % Acrylnitril und 3 Gew.% Hydroxibutylacrylat mit einem $\overline{M}_w$ = 60000, hergestellt durch kontinuierliche Polymerisation) in Toluol unter Verwendung von Tributylamin als Säurefänger in 20 min. zudosiert. Das Pfropfmischpolymere wurde durch Entfernen des Lösungsmittels erhalten.

V(3) Durch kontinuierliche Copolymerisation von 60 Gew.% Styrol, 35 Gew.% Acrylnitril, 3 Gew.% Chlormethylstyrol und 2 Gew.% p-Chlormethylstyrol wurde unter Zusatz von 60 Gew.-Teilen Ethylbenzol, bezogen auf 100 Gew.-Teile Monomere, bei 140 °C und 9 bar bei 6 h Verweilzeit ein Copolymeres mit statistischer Verteilung der Monomeren und mit $\overline{M}_w$ = 39000 hergestellt. Das Copolymer wurde über einen Extruder entgast und als Granulat gewonnen. 50 g des getrockneten Copolymeren wurde mit 1000 g Toluol und anschließend mit 50 g F versetzt und auf 90 °C erwärmt. Nach Abkühlen auf 30 °C fügte man sofort 50 g einer 50 gew.%igen wäßrigen Natronlauge unter starkem Rühren zu. Nach 5 min. fügte man 5 g Tetrabutylammoniumhydrogensulfat zu. Es wurde 4 h bei Raumtemperatur gerührt und in 1 h auf 60 °C erwärmt, die Reaktion 1 h bei 60 °C gehalten und anschließend 500 g Toluol hinzugefügt. Es wurde wie üblich aufgearbeitet.

Beispiele 1 bis 15 und Vergleichsversuche 1* bis 13*

In der folgenden Tabelle 4 sind Beispiele und Vergleichsversuche von thermoplastischen Formmassen aufgeführt. Die Formmassen wurden durch Aufschmelzen und Mischen der angegebenen Komponenten in den angegebenen Mengen in einem Zweischneckenextruder bei 280 °C und einer Verweilzeit von 3 Minuten und anschließendes Granulieren erhalten.

Die Eigenschaften der Formmassen sind in Tabelle 5 zusammengefaßt.

Tabelle 4: Formmassen

| Bei-spiel | Ver-gleichs-versuch | Komponenten, Mengenangabe in kg: A oder V Art | A oder V Menge | B Art | B Menge | C Art | C Menge | D Art | D Menge | E Art | E Menge | F, G, H, I Art | F, G, H, I Menge |
|---|---|---|---|---|---|---|---|---|---|---|---|---|---|
| 1 | | A(2) | 3,96 | B(1) | 4,8 | C(1) | 1,2 | D(1) | 0,03[1)] | | | | |
| | 1* | | | | | | | | | | | F | 4,0 |
| | | | | | | | | | | | | H(2) | 4,8 |
| | | | | | | | | | | | | I(1) | 1,2 |
| | 2* | V(1) | 0,8 | | | | | | | | | F | 3,6 |
| | | | | | | | | | | | | H(2) | 4,4 |
| | | | | | | | | | | | | I(1) | 1,2 |
| 2 | | A(1) | 4,35 | B(3) | 3,3 | C(2) | 1,8 | D(3) | 0,03[2)] | | | G | 0,5 |
| | 3* | A(1) | 4,64 | | | | | D(2) | 0,04[2)] | | | H(1) | 4,0 |
| | | | | | | | | | | | | I(2) | 1,3 |
| | 4* | | | B(2) | 4,6 | C(3) | 1,3 | | | | | F | 4,7 |
| 3 | | A(1) | 2,65 | B(1) | 6,0 | C(3) | 1,3 | D(1) | 0,05 | | | | |
| 4 | | A(2) | 4,47 | B(3) | 5,5 | C(1) | 1,0 | D(2) | 0,03 | | | | |
| 5 | | A(1) | 3,54 | B(3) | 4,0 | C(3) | 1,5 | D(1) | 0,02[4)] | | | H(1) | 0,5 |
| 6 | | A(1) | 4,64 | B(2) | 4,0 | C(3) | 1,3 | D(2) | 0,04[2)] | | | | |
| 7 | | A(1) | 5,58 | B(1) | 3,0 | C(1) | 1,4 | D(4) | 0,02 | | | | |
| 8 | | A(2) | 2,95 | B(2) | 5,0 | C(2) | 2,0 | D(3) | 0,05 | | | | |
| | 5* | | | | | | | | | | | F | 3,0 |
| | | | | | | | | | | | | H(1) | 5,0 |
| | | | | | | | | | | | | I(1) | 2,0 |
| 9 | | A(1) | 3,87 | B(4) | 3,4 | C(2) | 1,6 | D(1) | 0,02[1)] | E(2) | 1,1 | | |
| | 6* | | | | | | | | | E(2) | 1,1 | F | 3,9 |
| | | | | | | | | | | | | H(2) | 3,4 |
| | | | | | | | | | | | | I(3) | 1,6 |
| | 7* | V(2) | 1,2 | | | | | | | E(2) | 1,1 | F | 3,3 |
| | | | | | | | | | | | | H(2) | 2,8 |
| | | | | | | | | | | | | I(3) | 1,6 |

Tabelle 4: Fortsetzung

| Bei-spiel | Ver-gleichs-versuch | Komponenten, Mengenangabe in kg: A oder V Art | A oder V Menge | B Art | B Menge | C Art | C Menge | D Art | D Menge | E Art | E Menge | F, G, H, I Art | F, G, H, I Menge |
|---|---|---|---|---|---|---|---|---|---|---|---|---|---|
| 10 | | A(2) | 4,15 | B(5) | 3,6 | C(3) | 1,0 | D(2) | 0,05 2) | E(1) | 1,2 | | |
| 11 | | A(1) | 5,16 | B(3) | 2,8 | C(1) | 1,5 | D(3) | 0,04 1) | E(2) | 0,5 | | |
| 12 | | A(2) | 3,37 | B(3) | 4,1 | C(3) | 1,7 | D(4) | 0,03 | E(2) | 0,8 | | |
| 13 | | A(2) | 4,85 | B(4) | 2,9 | C(3) | 1,2 | D(1) | 0,02 3) | E(1) | 1,0 | | |
| | 8* | A(2) | 4,2 | B(5) | 3,6 | | | | | E(1) | 1,2 | I(4) | 1,0 |
| | 9* | | | | | C(1) | 1,5 | | | E(2) | 0,5 | F | 5,2 |
| | | | | | | | | | | | | H(1) | 2,8 |
| | 10* | | | | | C(3) | 1,7 | D(4) | 0,03 | E(2) | 0,8 | F | 3,37 |
| | | | | | | | | | | | | H(2) | 4,1 |
| | 11* | | | B(4) | 2,9 | C(3) | 1,2 | | | E(1) | 1,0 | F | 4,9 |
| 14 | | A(2) | 3,58 | B(5) | 4,4 | C(2) | 1,6 | D(2) | 0,02 | E(1) | 0,4 | G | 0,5 |
| 15 | | A(1) | 3,94 | B(4) | 2,4 | C(1) | 1,0 | D(4) | 0,04 | E(2) | 1,2 | | |
| | 12* | | | | | | | | | E(2) | 1,2 | F | 4,7 |
| | | | | | | | | | | | | H(2) | 3,1 |
| | | | | | | | | | | | | I(3) | 1,0 |
| | 13* | V(3) | 1,4 | | | | | | | E(2) | 1,2 | F | 4,0 |
| | | | | | | | | | | | | H(2) | 2,4 |
| | | | | | | | | | | | | I(3) | 1,0 |

1) zusätzlich 0,01 kg Decanol-1

2) zusätzlich 0,02 kg Decanol-1

3) zusätzlich 0,03 kg Decanol-1

4) zusätzlich 0,04 kg Decanol-1

Tabelle 5

| Eigenschaften | | | | | |
|---|---|---|---|---|---|
| Beispiel | Vergleichsversuch | Brandschutztest UL 94; nicht bestanden: n.b. | Kerbschlagzähigkeit bei +23°C [kJ/m$^2$] | Schlagzähigkeit [kJ/m$^2$] | |
| | | | | +23°C | -40°C |
| 1 | | | 22 | k[1)] | k[1)] |
| | 1* | | 2 | 15 | 5 |
| | 2* | | 11 | k | 50 |
| 2 | | | 25 | k | k |
| | 3* | | 6 | 90 | 20 |
| | 4* | | 11 | k | 20 |
| 3 | | | 16 | k | 90 |
| 4 | | | 15 | k | k |
| 5 | | | 17 | k | 80 |
| 6 | | | 20 | k | k |
| 7 | | | 16 | k | 70 |
| 8 | | | 24 | k | k |
| | 5* | | 3 | 20 | 5 |
| 9 | | V0 | 14 | | |
| | 6* | n.b. | 1 | | |
| | 7* | V1 | 5 | | |
| 10 | | 5V | 12 | | |
| 11 | | V0 | 13 | | |
| 12 | | V1 | 15 | | |
| 13 | | 5V | 12 | | |
| | 8* | V0 | 7 | | |
| | 9* | V1 | 8 | | |
| | 10* | V1 | 6 | | |
| | 11* | V0 | 8 | | |
| 14 | | V1 | 12 | | |
| 15 | | 5V | 12 | | |
| | 12* | n.b. | 3 | | |
| | 13* | V0 | 6 | | |

[1)] kein Bruch

## Patentansprüche

**1.** Thermoplastische Formmassen auf Basis von Polyphenylenether, erhältlich durch Mischen bei einer Temperatur von 200 bis 320°C während 0,5 bis 30 Minuten von im wesentlichen

A) 2 bis 95,99 Gew.-Teilen, bezogen auf die Summe der Komponenten A, B, C und D eines modifizierten Polyphenylenethers, hergestellt durch Umsetzung in der Schmelze von

$a_1$) 70 bis 99,95 Gew.%, bezogen auf A, eines Polymeranteils, der mindestens 30 Gew.%, bezogen auf $a_1$, Polyphenylenether und höchstens 70 Gew.%, bezogen auf $a_1$, eines vinylaromatischen Polymeren enthält,

$a_2$) 0,05 bis 10 Gew.%, bezogen auf A, mindestens einer der Verbindungen

$a_{21}$) eines amidgruppenhaltigen Monomeren mit einer polymerisierbaren Doppelbindung,

$a_{22}$) eines lactamgruppenhaltigen Monomeren mit einer polymerisierbaren Doppelbindung

$a_{23}$) einer $\alpha,\beta$-ungesättigten Dicarbonylverbindung und

$a_3$) 0 bis 20 Gew.%, bezogen auf A, eines weiteren Comonomeren, das unter den Herstellbedingungen mit $a_1$ und/oder $a_2$ reagieren kann,

B) 2 bis 95,99 Gew.-Teilen, bezogen auf die Summe der Komponenten A, B, C und D eines thermoplastischen Copolymerisates aus 30 bis 90,9 Gew.%, bezogen auf B, eines vinylaromatischen Kohlenwasserstoffes mit 8 bis 12 C-Atomen ($b_{11}$), 9 bis 40 Gew.%, bezogen auf B, eines nitrilgruppenhaltigen, ethylenisch ungesättigten Monomeren mit 3 bis 6 C-Atomen ($b_{12}$), 0,1 bis 30 Gew.%, bezogen auf B, eines Maleinsäurederivates ($b_{13}$) oder eines eine Epoxygruppe ($b_{14}$), Oxazolingruppe ($b_{15}$) oder Hydroxygruppe ($b_{16}$) tragenden copolymerisierbaren ethylenisch ungesättigten Monomeren oder eines Gemisches von mindestens zwei der Verbindungen $b_{13}$ bis $b_{16}$ und 0 bis 30 Gew.%, bezogen auf B, mindestens eines von $b_{11}$ bis $b_{16}$ verschiedenen, copolymerisierbaren, ethylenisch ungesättigten Monomeren $b_{17}$,

C) 2 bis 95,99 Gew.-Teilen, bezogen auf die Summe aus A, B, C und D, eines Pfropfmischpolymerisates aus 30 bis 90 Gew.%, bezogen auf C, eines Butadien- und/oder Acrylatkautschukes mit einer Glastemperatur von unter 0 °C als Pfropfgrundlage und 10 bis 70 Gew.%, bezogen auf C, eines in Gegenwart der Pfropfgrundlage hergestellten Copolymerisates B als Pfropfhülle,

und

D) 0,01 bis 10 Gew.-Teilen, bezogen auf die Summe von A, B, C und D, einer Verbindung, die mindestens zwei Substituenten aus der Gruppe der Hydroxy-, Thiol-, Epoxy- und Aminoreste enthält,

wobei die Summe der Komponenten aus A, B, C und D 100 Gew.-Teile ergibt.

2. Selbstverlöschende thermoplastische Formmassen nach Anspruch 1, dadurch gekennzeichnet, daß sie kein Halogen und zusätzlich 1 bis 40 Gew.%, bezogen auf die Formmasse, einer phosphorenthaltenden Verbindung E enthalten.

3. Thermoplastische Formmassen nach den Ansprüchen 1 bis 2, dadurch gekennzeichnet, daß die Komponente $a_{21}$ eine Verbindung der allgemeinen Formel I oder II ist

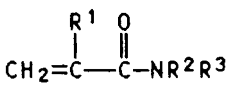

I

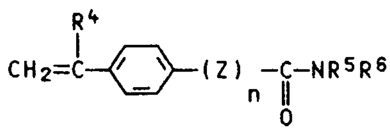

II ,

wobei $R^1$, $R^2$, $R^3$, $R^4$, $R^5$ und $R^6$ Wasserstoff, Alkyl- oder Cycloalkylgruppen mit bis zu 12 C-Atomen oder Arylgruppen und Z Alkylengruppen mit 1 bis 12 C-Atomen und $R^1$ und $R^4$ zusätzlich Alkoxygruppen mit bis zu 12 C-Atomen darstellen und n den Wert 0 oder 1 hat.

4. Thermoplastische Formmassen nach den Ansprüchen 1 bis 3, dadurch gekennzeichnet, daß die Komponente $a_{22}$ eine Verbindung der allgemeinen Formel III ist

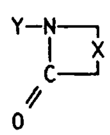

III

wobei X eine lineare oder verzweigte Alkylengruppe mit 2 bis 15 C-Atomen darstellt und Y die allgemeine Formel

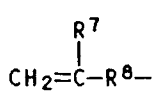

hat, wobei $R^7$ Wasserstoff, eine Alkyl- oder Alkoxygruppe mit 1 bis 4 C-Atomen und $R^8$ einen der nachstehenden zweiwertigen Reste

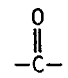

,

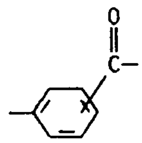

oder

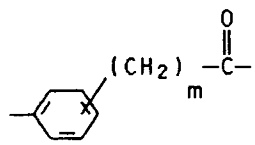

,

wobei m eine ganze Zahl von 1 bis 4 ist, darstellen.

5. Thermoplastische Formmassen nach den Ansprüchen 1 bis 4, dadurch gekennzeichnet, daß die Komponente $a_{23}$ eine Verbindung der allgemeinen Formel IV ist

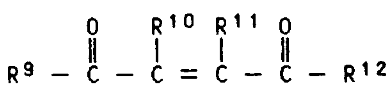

IV

wobei

| | |
|---|---|
| $R^9$ und $R^{12}$ | Hydroxylgruppen, Aroxy-, Alkoxy-, Aralkoxy- oder Cycloalkoxygruppen mit bis zu 12 C-Atomen, $-NR^{13}R^{14}$ oder gemeinsam -O-oder $-NR^{13}-$, |
| $R^{10}$ und $R^{11}$ | Wasserstoff oder, wenn $R^{10}$ oder $R^{11}$ Wasserstoff ist, eine Alkyl- oder Cycloalkylgruppe mit bis zu 12 C-Atomen, eine Arylgruppe oder gemeinsam eine Alkylengruppe mit 4 C-Atomen, |
| $R^{13}$ und $R^{14}$ | Wasserstoff, Alkyl-, Cycloalkyl-, Aralkyl- oder Arylgruppen mit bis zu 12 C-Atomen, die ihrerseits durch $C_1$-$C_4$-Alkyl- oder -Alkoxygruppen substituiert sein können, darstellen. |

6. Thermoplastische Formmassen nach den Ansprüchen 1 bis 5, dadurch gekennzeichnet, daß das mindestens eine Epoxidgruppe tragende Monomere $b_{14}$ neben der Struktureinheit

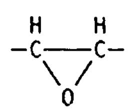

eine Vinylbenzol-, Acryloyl-, Methacryloyl-, Acrylamido- oder Methacrylamidogruppe im Molekül enthält.

7. Thermoplastische Formmassen nach den Ansprüchen 1 bis 6, dadurch gekennzeichnet, daß das mindestens eine Oxazolingruppe tragende Monomere $b_{15}$ die allgemeine Formel V

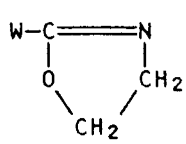

V

hat, wobei W eine mit $b_{11}$ und $b_{12}$ copolymerisierbare Doppelbindung enthält.

**8.** Thermoplastische Formmassen nach den Ansprüchen 1 bis 7, wobei das mindestens eine Hydroxylgruppe tragende Monomere $b_{16}$ eine Verbindung der allgemeinen Formel VI

$CH_2=CR^{16}\text{-K-OH}$ VI

ist, wobei

$R^{16}$ Wasserstoff oder $C_1$-$C_{25}$-Alkyl und

K 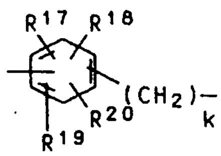 , 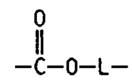 , 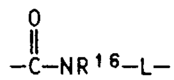 oder 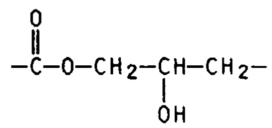 ,

$R^{17}$ bis $R^{20}$ Wasserstoff, $C_1$-$C_8$-Alkyl oder -CN,
k eine ganze Zahl von 0 bis 6 und
L ein Brückenglied ist.

**9.** Verfahren zur Herstellung von thermoplastischen Formmassen gemäß den Ansprüchen 1 bis 8 durch Mischen der Komponenten bei einer Temperatur im Bereich von 200 bis 320 °C während 0,5 bis 30 Minuten.

## Claims

**1.** A thermoplastic molding material based on a polyphenylene ether, obtainable by mixing, at from 200 to 320 °C for from 0.5 to 30 minutes, essentially

A) from 2 to 95.99 parts by weight, based on the sum of components A, B, C and D, of a modified polyphenylene ether, prepared by reacting in the melt

$a_1$) from 70 to 99.95% by weight, based on A, of a polymer which contains not less than 30% by weight, based on $a_1$, of polyphenylene ether and not more than 70% by weight, based on $a_1$, of a vinylaromatic polymer,

$a_2$) from 0.05 to 10% by weight, based on A, of one or more of the compounds

$a_{21}$) an amido-containing monomer having a polymerizable double bond,

$a_{22}$) a lactam-containing monomer having a polymerizable double bond

$a_{23}$) an $\alpha,\beta$-unsaturated dicarbonyl compound, and

$a_3$) from 0 to 20% by weight, based on A, of a further comonomer which is capable of reacting with $a_1$ and/or $a_2$ under the preparation conditions,

B) from 2 to 95.99 parts by weight, based on the sum of components A, B, C and D, of a thermoplastic copolymer of from 30 to 90.9% by weight, based on B, of a vinylaromatic hydrocarbon of 8 to 12 carbon atoms ($b_{11}$), from 9 to 40% by weight, based on B, of a nitrile-containing, ethylenically unsaturated monomer of 3 to 6 carbon atoms ($b_{12}$), from 0.1 to 30% by weight, based on B, of a maleic acid derivative ($b_{13}$) or of a copolymerizable ethylenically unsaturated monomer carrying an epoxy group ($b_{14}$), oxazoline group ($b_{15}$) or hydroxyl group ($b_{16}$) or of a mixture of two or more of the compounds $b_{13}$ to $b_{16}$ and from 0 to 30% by weight, based on B, of one or more copolymerizable, ethylenically unsaturated monomers $b_{17}$ which differ from $b_{11}$ to $b_{16}$,

C) from 2 to 95.99 parts by weight, based on the sum of A, B, C and D, of a graft copolymer of from 30 to 90% by weight, based on C, of a butadiene and/or acrylate rubber having a glass transition temperature below 0 °C, as the grafting base, and from 10 to 70% by weight, based on C, of a copolymer B prepared in the presence of the grafting base, as the graft,

and

D) from 0.01 to 10 parts by weight, based on the sum of A, B, C and D, of a compound which contains two or more substituents selected from the group consisting of hydroxyl, thiol, epoxy and amino radicals,

the sum of components A, B, C and D being 100 parts by weight.

2. A self-extinguishing thermoplastic molding material as claimed in claim 1, which contains no halogen and additionally contains from 1 to 40% by weight, based on the molding material, of a phosphorus-containing compound E.

3. A thermoplastic molding material as claimed in claim 1 or 2, wherein component $a_{21}$ is a compound of the general formula I or II

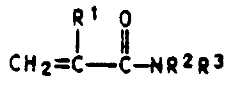

I

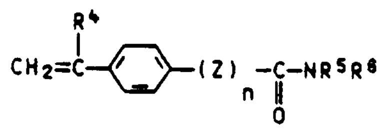

II

where $R^1$, $R^2$, $R^3$, $R^4$, $R^5$ and $R^6$ are each hydrogen or an alkyl or cycloalkyl group of not more than 12 carbon atoms or aryl, Z is alkylene of 1 to 12 carbon atoms, $R^1$ and $R^4$ may additionally be alkoxy of not more than 12 carbon atoms and n is 0 or 1.

4. A thermoplastic molding material as claimed in claim 1 or 2 or 3, wherein component $a_{22}$ is a compound of the general formula III

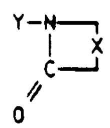

III

where X is linear or branched alkylene of 2 to 15 carbon atoms and Y is of the general formula

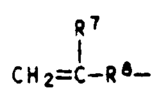

where $R^7$ is hydrogen or an alkyl or alkoxy of 1 to 4 carbon atoms and $R^8$ is one of the divalent radicals below

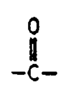

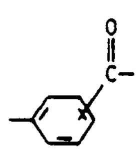

or

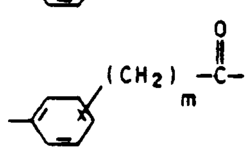

where m is an integer of from 1 to 4.

5. A thermoplastic molding material as claimed in claim 1 or 2 or 3 or 4, wherein component $a_{23}$ is a

compound of the general formula IV

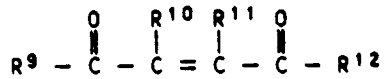 IV

where
$R^9$ and $R^{12}$ are each hydroxyl, an aryloxy, alkoxy, aralkoxy or cycloalkoxy group of not more than 12 carbon atoms or $-NR^{13}R^{14}$ or together are -O- or $-NR^{13}-$,
$R^{10}$ and $R^{11}$ are each hydrogen or, if $R^{10}$ or $R^{11}$ is hydrogen, are an alkyl or cycloalkyl group of not more than 12 carbon atoms or aryl or together form an alkylene group of 4 carbon atoms and
$R^{13}$ and $R^{14}$ are each hydrogen or an alkyl, cycloalkyl, aralkyl or aryl group of not more than 12 carbon atoms which in turn may be substituted by $C_1$-$C_4$-alkyl or $C_1$-$C_4$-alkoxy.

**6.** A thermoplastic molding material as claimed in claim 1 or 2 or 3 or 4 or 5, wherein the monomer $b_{14}$ carrying one or more epoxy groups contains a vinylbenzene, acryloyl, methacryloyl, acrylamido or methacrylamido group in the molecule, in addition to the structural unit

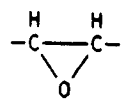

**7.** A thermoplastic molding material as claimed in claim 1 or 2 or 3 or 4 or 5 or 6, wherein the monomer $b_{15}$ carrying one or more oxazoline groups is of the general formula V

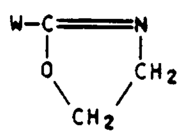 V

where W contains a double bond copolymerizable with $b_{11}$ and $b_{12}$.

**8.** A thermoplastic molding material as claimed in claim 1 or 2 or 3 or 4 or 5 or 6 or 7, wherein the monomer $b_{16}$ carrying one or more hydroxyl groups is a compound of the general formula VI

$CH_2 = CR^{16}$-K-OH VI

where
$R^{16}$ is hydrogen or $C_1$-$C_{25}$-alkyl and

K is 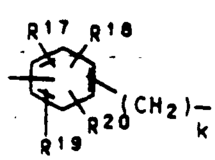, 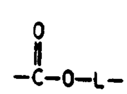, 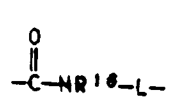 or 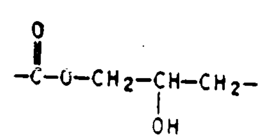

$R^{17}$ to $R^{20}$ are each hydrogen, $C_1$-$C_8$-alkyl or -CN,

k is an integer of from 0 to 6 and
L is a bridge member.

**9.** A process for the preparation of a thermoplastic molding material as claimed in claim 1 or 2 or 3 or 4 or 5 or 6 or 7 or 8 by mixing the components at from 200 to 320°C for from 0.5 to 30 minutes.

**Revendications**

**1.** Masses à mouler thermoplastiques à base de polyoxyphénylène, pouvant être obtenues par mélange, à une température de 200 à 320°C pendant 0,5 à 30 mn, des constituants essentiels suivants:

A) 2 à 95,99 parties en poids, par rapport à la somme des composants A, B, a et D, d'un polyoxyphénylène modifié, préparé par réaction dans la masse fondue de

$a_1$) 70 à 99,95% en poids, par rapport à A, d'un composant polymère qui contient au minimum 30% en poids, par rapport à $a_1$, de polyoxyphénylène et au maximum 70% en poids, par rapport à $a_1$, d'un polymère vinylaromatique,

$a_2$) 0,05 à 10% en poids, par rapport à A, de l'un au moins des composes suivants:

$a_{21}$) un monomère contenant des groupements amide et ayant une double liaison polymérisable,

$a_{22}$) un monomère contenant des groupements lactame et ayant une double liaison polymérisable,

$a_{23}$) un composé dicarbonylé $\alpha,\beta$-insaturé, et

$a_3$) 0 à 20% en poids, par rapport à A, d'un autre comonomère qui peut reagir avec $a_1$ et/ou $a_2$ dans les conditions de la préparation,

B) 2 à 95,99 parties en poids, par rapport à la somme des composants A, B, C et D, d'un copolymère thermoplastique de 30 à 90,9 % en poids, par rapport à B, d'un hydrocarbure vinylaromatique à 8-12 atomes de carbone ($b_{11}$), de 9 à 40% en poids, par rapport à B, d'un monomère à 3-6 atomes de carbone à insaturation éthylénique contenant des groupements nitrile ($b_{12}$), de 0,1 à 30% en poids, par rapport à B, d'un dérivé d'acide maléique ($b_{13}$) ou d'un monomère copolymérisable à insaturation éthylénique, portant un groupement époxy ($b_{14}$), un groupement oxazoline ($b_{15}$) ou un groupement hydroxy ($b_{16}$) ou d'un mélange d'au moins deux des composés $b_{13}$ à $b_{16}$, et de 0 à 30% en poids, par rapport à B, d'au moins un monomère $b_{17}$ à insaturation éthylénique, copolymérisable, différent de $b_{11}$ à $b_{16}$,

C) 2 à 95,99 parties en poids, par rapport à la somme de A, B, C et D, d'un copolymère greffé de 30 à 90% en poids, par rapport à C, d'un caoutchouc butadiène et/ou acrylate ayant une température de transition vitreuse de moins de 0°C en tant que base de greffage, et de 10 à 70% en poids, par rapport à C, d'un copolymère B prépare en présence de la base de greffage, en tant qu'enveloppe de greffage,

et

D) 0,01 à 10 parties en poids, par rapport à la somme de A, B, C et D, d'un composé qui contient au moins deux substituants du groupe des restes hydroxy, thiol, époxy et amino,

la somme des composants A, B, C et D donnant 100 parties en poids.

**2.** Masses à mouler thermoplastiques autoextinctrices selon la revendication 1, caractérisées en ce qu'elles ne contiennent pas d'halogène et contiennent en plus de 1 à 40% en poids, par rapport à la masse à mouler, d'un composé E contenant du phosphore.

**3.** Masses à mouler thermoplastiques selon la revendication 1 ou 2, caractérisées en ce que le composant $a_{21}$ est un compose de formule générale I ou II

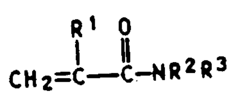

I

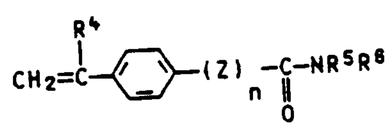

II .

$R^1$, $R^2$, $R^3$, $R^4$, $R^5$ et $R^6$ représentant des atomes d'hydrogène, des groupements alkyle ou cycloalkyle

renfermant jusqu'à 12 atomes de carbone ou des groupements aryle, Z représentant des groupements alkylène à 1-12 atomes de carbone, $R^1$ et $R^4$ pouvant en plus représenter des groupements alcoxy renfermant jusqu'à 12 atomes de carbone et n avant la valeur 0 ou 1.

**4.** Masses à mouler thermoplastiques selon l'une quelconque des revendications 1 a 3, caractérisées en ce que le composant $a_{22}$ est un compose de formule générale III

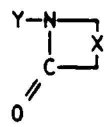

III

X représentant un groupement alkylène lineaire ou ramifié à 2-15 atomes de carbone, et Y ayant la formule générale

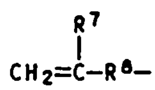

dans laquelle $R^7$ représente un atome d'hydrogène ou un groupement alkyle ou alcoxy à 1-4 atomes de carbone, et $R^8$ représentant l'un des restes bivalents suivants

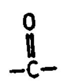

,

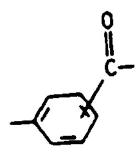

ou

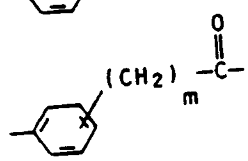

,

m étant un nombre entier de 1 à 4.

**5.** Masses à mouler thermoplastiques selon l'une quelconque des revendications 1 à 4, caractérisées en ce que le composant $a_{23}$ est un compose de formule générale IV

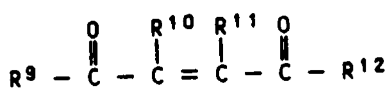

IV

dans laquelle

- $R^9$ et $R^{12}$ représentent des groupements hydroxy, des groupements aroxy, alcoxy, aralcoxy ou cycloalcoxy renfermant jusqu'à 12 atomes de carbone, $-NR^{13}R^{14}$ ou, en commun, -O- ou $-NR^{13}-$,
- $R^{10}$ et $R^{11}$ représentent des atomes d'hydrogène ou, lorsque $R^{10}$ ou $R^{11}$ est un atome d'hydrogène, ils représentent un groupement alkyle ou cycloalkyle renfermant jusqu'à 12 atomes de carbone, un groupement aryle ou, en commun, un groupement alkylène à 4 atomes de carbone,

| | |
|---|---|
| $R^{13}$ et $R^{14}$ | représentent des atomes d'hydrogène, des groupements alkyle, cycloalkyle, aralkyle ou aryle qui renferment jusqu'à 12 atomes de carbone et qui peuvent être substitués de leur côté par des groupements alkyle ou alcoxy en $C_1$ à $C_4$. |

**6.** Masses à mouler thermoplastiques selon l'une quelconque des revendications 1 à 5, caractérisées en ce que le monomère $b_{14}$ portant au moins un groupement époxy contient dans la molécule, outre le motif structural

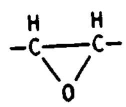

un groupement vinylbenzène, acryloyle, méthacryloyle, acrylamido ou méthacrylamido.

**7.** Masses a mouler thermoplastiques selon l'une quelconque des revendications 1 à 6, caractérisées en ce que le monomère $b_{15}$ portant au moins un groupement oxazoline répond à la formule générale V

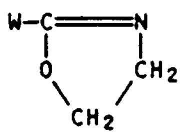 V

W contenant une double liaison copolymérisable avec $b_{11}$ et $b_{12}$.

**8.** Masses à mouler thermoplastiques selon l'une quelconque des revendications 1 à 7, dans lesquelles le monomère $b_{16}$ portant au moins un groupement hydroxy est un composé de formule générale VI

$CH_2 = CR^{16}\text{-K-OH}$ VI

dans laquelle

| | |
|---|---|
| $R^{16}$ | est un atome d'hydrogène ou un groupement alkyle en $C_1$-$C_{25}$ et |
| K | est mis pour |

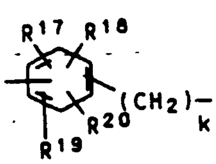 , 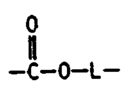 , 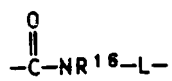 ou 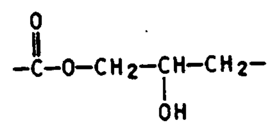 ,

| | |
|---|---|
| $R^{17}$ à $R^{20}$ | étant des atomes d'hydrogène, des groupements alkyle en $C_1$-$C_6$ ou -CN, |
| k | est un nombre entier de 0 à 6 et |
| L | est un maillon de pontage. |

**9.** Procédé de préparation de masses à mouler thermoplastiques selon l'une quelconque des revendications 1 à 8, par mélange des composants à une température dans la gamme de 200 à 320 °C pendant 0,5 à 30 mn.